(19) Europäisches Patentamt
European Patent Office
Office européen des brevets

(11) Numéro de publication: **0 215 016 B1**

(12) **FASCICULE DE BREVET EUROPEEN**

(45) Date de publication du fascicule du brevet: **27.06.90**

(51) Int. Cl.$^5$: **C 25 B 1/02,** G 01 N 27/417, B 01 D 53/32

(21) Numéro de dépôt: **86901089.2**

(22) Date de dépôt: **10.02.86**

(86) Numéro de dépôt international: **PCT/FR86/00035**

(87) Numéro de publication internationale: **WO 86/04932 28.08.86 Gazette 86/19**

(54) **COMPOSITIONS SOLIDES A BASE DE SUPEROXYDES, LEUR FABRICATION ET LEURS APPLICATIONS ELECTROCHIMIQUES.**

(30) Priorité: **15.02.85 FR 8502218**

(43) Date de publication de la demande: **25.03.87 Bulletin 87/13**

(45) Mention de la délivrance du brevet: **27.06.90 Bulletin 90/26**

(84) Etats contractants désignés: **AT BE CH DE FR GB IT LI LU NL SE**

(56) Documents cités: **néant**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **JEANNE, Francis**
**6, rue des Picoteuses**
**F-78350 Jouy-en-Josas (FR)**
Inventeur: **LOMBARD, Serge**
**22, rue des Poulettes**
**F-91160 Longjumeau (FR)**
Inventeur: **SCHMIDT, Emmanuel**
**8, rue Jules Edouard Voisembert**
**F-92130 Issy-les-Moulineaux (FR)**

(74) Mandataire: **Sadones Laurent, Renée et al**
**L'AIR LIQUIDE 75, quai d'Orsay**
**F-75321 Paris Cédex 07 (FR)**

**EP 0 215 016 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention a pour objet des compositions solides à base de superoxydes présentant une conduction ionique élevée, leur procédé de fabrication, et leurs applications électrochimiques.

Elle vise, en particulier, leurs applications comme électrolytes dans des dispositifs de séparation ou d'analyse d'oxygène.

L'oxynène moléculaire $O_2$ est aisément réductible à l'état d'anion en raison de son caractère très électroactif ce qui le distingue des autres constituants de l'air (azote, gaz rares) et de nombreux autres gaz.

Les stades anioniques successifs de la réduction de $O_2$ conduisent à $O_2^-$ (ion superoxyde), $O_2^{2-}$ (ion peroxyde) ou $O_2H^-$ (ion hydroperoxyde) et, avec rupture de la liaison O—O, à 2 $O^{--}$ ou 2 $OH^-$(ions oxyde et hydroxyde respectivement).

L'électrodiffusion de l'oxygène sous forme anionique a déjà été envisagée pour séparer l'oxygène d'un milieu donné.

D'une manière générale, une première électrode ou cathode permet de réduire l'oxygène moléculaire en un anion oxygéné qui migre à travers un électrolyte jusqu'à une seconde électrode ou anode qui l'oxyde en reformant de l'oxygène moléculaire.

Plusieurs types d'électrolytes ont été proposés pour séparer l'oxygène par électrodiffusion.

Les électrolytes les plus largement utilisés en phase liquide sont constitués par des solutions aqueuses de potasse et en phase solide par des zircones dopées par des oxydes tels que ceux d'yttrium $Y_2O_3$ ou de calcium CaO. Les anions oxygénés mis en jeu correspondent respectivement à l'ion hydroxyde $OH^-$ et à l'ion oxyde $O^{--}$.

Dans ces deux cas, l'oxygène moléculaire subit une réduction à quatre électrons par molécule et la molécule d'oxygène est coupée.

Les surtensions très fortes liées à la nécessité d'activer l'ensemble des réactions chimiques et électrochimiques aux électrodes entraînent une consommation énergétique très supérieure à l'énergie théorique de séparation de l'oxygène.

Par exemple, dans le cas d'un extracteur d'oxygène par électrodiffusion dans une solution de potasse, la tension à appliquer pour produire de l'oxygène sous 1 bar à partir de l'air atmosphérique et la consommation d'énergie correspondante sont d'environ 100 fois les valeurs minimales données par la thermodynamique.

Dans le cas de la zircone très peu conductrice à température ambiante, il est nécessaire de chauffer au-dessus de 600°C pour obtenir une conductivité ionique suffisante et pour activer les réactions d'électrodes. L'emploi de hautes températures entraîne par ailleurs, des problèmes de réactivité chimique en phase gazeuse et des problèmes de corrosion des matériaux d'électrode.

D'autres milieux ont été envisagés mais n'ont pu être développés tels que les sels fondus à base de nitrates alcalins fonctionnant à des températures d'environ 250°C. Dans ce cas, la corrosion des électrodes et la précipitation de peroxydes ont empêché l'application de ces milieux à la production d'oxygène. De plus, dans une application en jauge de pression partielle d'oxygène, ces milieux présentent des temps de réponse de l'ordre de plusieurs heures, ce qui les rend inutilisables dans la pratique.

La séparation des gaz, et en particulier, l'extraction de l'oxygène de l'air sont des procédés généralement coûteux en énergie. Les procédés d'électrodiffusion déjà mentionnés le sont particulièrement par suite des fortes surtensions d'électrodes et aussi des quantités de courant importantes requises, soit 4 faradays pour une mole d'oxygène transportée.

Bien que des efforts importants pour réduire les surtensions aient été entrepris dans le domaine des électrodes à oxygène pour piles à combustible et dans celui des anodes à oxygène pour l'électrolyse de l'eau, les solutions le plus souvent proposées font appel à une électrocatalyse utilisant des composés coûteux à base de métaux précieux et/ou de molécules organiques de synthèse délicate.

Par ailleurs, les fortes intensités de courant nécessaires lorque le transport d'une mole d'oxygène implique 4 faradays entraînent des pertes d'énergie par effet Joule à la fois dans le milieu électrolytique et dans les conducteurs.

Il a été proposé dans le brevet US 4 475 994 une méthode électrochimique de séparation de l'oxygène de l'air ou d'un mélange de gaz, utilisant une cellule électrochimique comprenant une cathode où l'oxygène est réduit en ion superoxyde $O_2^-$ et une anode où l'ion $O_2^-$ est réoxydé en $O_2$, le transport de l'ion superoxyde étant assuré par un électrolyte. Dans cette cellule, la réaction d'oxydo-réduction ne met en jeu qu'un seul électron par molécule d'$O_2$.

Cependant, dans ce cas, l'anion superoxyde produit par voie électrochimique à la cathode n'existe que transitoirement, le temps de son transport à l'anode où il est réoxydé: il en résulte qu'en l'absence de l'application d'un potentiel, la concentration en $O_2^-$ est pratiquement nulle.

La concentration en $O_2^-$ durant le fonctionnement de cette cellule s'avère insuffisante par exemple pour une production satisfaisante d'oxygène, à partir d'un milieu donné le renfermant.

Les travaux effectués par la Demanderesse ont montré qu'en utilisant des compositions de superoxydes appropriées, il est possible d'obtenir une concentration en $O_2^-$ favorisant la réaction d'oxydo-réduction de l'oxygène et, par là, la production d'oxygène.

L'invention a donc pour but de fournir de nouvelles compositions de superoxydes à conduction par $O_2^-$ élevée.

Elle vise également à fournir un procédé de préparation de ces compositions et de sels de superoxydes de mise en oeuvre aisée.

L'invention a également pour but de fournir des électrolytes à base de compositions de superoxydes assurant la stabilité et la mobilité des ions $O_2^-$, ainsi que des dispositifs électrochimiques renfermant de tels électrolytes, utilisables notamment pour la séparation de l'oxygène de l'air et la production d'oxygène.

Les compositions solides à base de superoxyde de l'invention comprennent:

— un matériau inerte vis-à-vis des anions superoxyde $O_2^-$, jouant le rôle de matrice à l'égard de ces anions,

— en l'absence de tout potentiel appliqué, des anions $O_2^-$ à une concentration d'au moins environ $10^{-2}$ milliéquivalent par gramme, notamment d'au moins environ 1 à 2 milliéquivalents par gramme, ces compositions formant un matériau stable, jusqu'à une température ne dépassant pas 100°C environ, la matrice permettant la mobilité des ions $O_2^-$ dans ce domaine de température.

Par patériau inerte vis-à-vis des anions $O_2^-$ on entend un matériau essentiellement aprotique et ne comportant pas de groupes susceptibles de réagir de façon irréversible avec $O_2^-$ même dans des conditions aprotiques, à savoir essentiellement: des groupes oxydants, des acides de Lewis, des centres électrophiles ou électrodéficients et des systèmes pouvant conduire à une élimination en milieu basique.

L'étude de ces compositions montre qu'elles possèdent des propriétés de conductivité ionique élevée, ce qui les rend particulièrement avantageuses comme matériaux pour l'élaboration d'électrolytes.

Elles présentent, en outre, l'avantage d'assurer une stabilité et une mobilité satisfaisantes des ions $O_2^-$ à des températures modérées, en particulier, à des températures de l'ordre de l'ambiante à 100°C environ.

D'une manière avantageuse, les compositions de l'invention présentent des propriétés filmogènes.

Des compositions préférées se présentent sous forme de membrane dont l'épaisseur est de préférence inférieure à 500 µ environ, avantageusement de l'ordre de 10 à 500 µ, notamment d'environ 30 à 100 µ.

La matrice, selon un mode préféré de réalisation des compositions de l'invention est à base d'un matériau macromoléculaire.

De préférence, le matériau macromoléculaire est à base d'un matériau polymère homo ou copolymère, le cas échéant réticulé.

Ce matériau polymère, capable d'assurer aux ions $O_2^-$ une mobilité satisfaisante pour une utilisation en électrochimie, est plus spécialement constitué par un matériau au moins partiellement amorphe aux températures de mise en oeuvre.

Il est en outre préférable de choisir un matériau polymère ayant la constante diélectrique la plus élevée possible.

Avantageusement, la température de transition vitreuse Tg de la phase formée par la matrice polymère contenant les anions $O_2^-$ est relativement basse, inférieure à 50°C environ.

Plus particulièrement, cette Tg est inférieure de 50°C environ à la température de fonctionnement.

Ce matériau polymère peut être formé d'un seul type de polymère ou de copolymère. Le polymère ou le copolymère peut être neutre, un sel de superoxyde étant dissous dans la matrice polymèrique. En variante, il comprend des sites chargés, plus spécialement, une majorité de sites cationiques, $O_2^-$ constituant l'un des contre-ions.

Selon une variante, plus particulièrement lorsqu'on souhaite rendre un polymère de base plus amorphe et/ou lorsqu'on souhaite abaisser la température Tg de la composition, le matériau polymère est formé d'un melange de polymères et/ou de copolymères.

Les copolymères sont des copolymères blocs ou séquencés (dans lesquels l'enchaînement des motifs est régulier) ou encore des copolymères statistiques (dans lesquels l'enchaînement des motifs est effectué au hasard, ce qui s'oppose à la cristallisation des chaînes).

On notera que chaque composant du mélange ou copolymère peut être choisi avantageusement en vue d'améliorer une propriété donnée, par exemple, le caractère amorphe, la conductivité, la constante diélectrique, le caractère hydrophobe, la tenue de température, les propriétés filmogènes, le contact avec un matériau voisin.

Des copolymères de ce type comprennent des produits de type POP-POE-POP, en particulier, ceux commercialisés sous la marque PLURACOL, dont chaque segment possède une masse molaire d'environ 3000.

Le terme générale de matériau polymère recouvre aussi bien les polymères mis en oeuvre seuls que les mélanges.

Un premier groupe de polymères préférés comprend des polyoxydes d'alcoylène.

Parmi les polyoxydes d'alcoylène, le polyoxyde de propylène (POP), formé de motifs répétitifs de formule

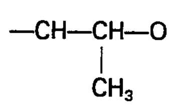

convient particulièrement.

D'une manière générale, la masse molaire du POP mis en oeuvre est avantageusement de l'ordre de 50 000 à 100 000.

Le polyoxyde d'éthylène (POE) dont les motifs constitutifs répondent à la formule $—CH_2—CH_2—O—$

constitué également un polymère approprié compte-tenu de ses bonnes propriétés de solvatation et de la valeur élevée de sa constante diélectrique ($\varepsilon = 4,5$). Sa température de transition vitreuse varie d'environ $-80$ à $-16$°C en fonction de la masse moléculaire.

Etant donné que la solubilité du POE dans les solvants organiques diminue fortement lorsqu'on dépasse une masse moléculaire de $10^6$, on opère avantageusement avec des POE de masse moléculaire inférieure, avantageusement de l'ordre de 600 000.

Un deuxième groupe comprend des polyphosphazènes, plus spécialement des polyphosphazènes substitués par des groupements éther.

Il s'agit plus spécialement de produits comprenant des motifs du type:

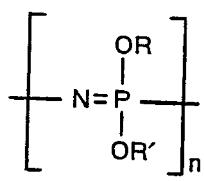

dans lequel *R* et *R'* représentent des chaînes hydrocarbonées saturées, comprenant éventuellement un ou plusieurs hétéroatomes de préférence O et N, éventuellement associées à des groupes aromatiques, et *n* est le nombre de motifs dans le polymère.

Dans le groupe des polyphosphazènes, on pourra également utiliser des polyphosphazènes substitué par des groupements porteurs de fonctions amine secondaire, amine tertiaire ou ammonium quaternaire, seules ou en combinaison.

Il s'agit en particulier des composés comprenant des motifs du type:

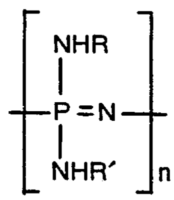

,

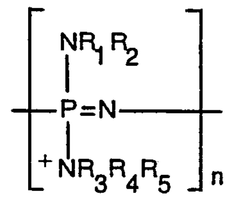

dans lesquels R, R', $R_1$, $R_2$, $R_3$, $R_4$ et $R_5$ sont tels que définis ci-dessus pour R et R'.

Un troisième groupe comprend les polyamides à base de motif type:

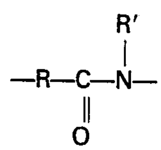

dans lesquels *R* et *R'* sont tels que définis ci-dessus.

Dans un quatrième groupe, le polymère utilisé pour l'élaboration de la matrice est un polyalcoylène-imine, plus spécialement un polyéthylèneimine substitué comprenant des motifs du type

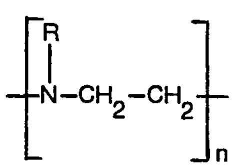

avec *R* tel que défini ci-dessus.

Les polymères de ces différents types sont substitués, le cas échéant, étant entendu que les substitutions conservent le caractère aprotique et inerte, vis-à-vis de $O_2^-$, de la matrice.

Des polymères substitués avantageux comprennent des chaînes perfluoroalcoyle.

Selon une autre disposition de l'invention, ces polymères comportent des sites greffés chargés ou non, permettant la solvatation transitoire de $O_2^-$. Les sites greffés jouant le rôle de sites-relais sont mobiles et situés en bout de chaînes latérales, à plusieurs maillons de distance du squelette carboné du polymère de base. Le site greffé peut être constitué par un motif des polymères considérés ci-dessus.

De préférence, il s'agit de greffons constitués par des groupes pyridyle. D'autres greffons sont du type sulfonamides

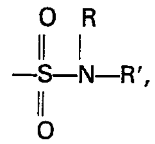

avec *R* et *R'* tels que définis ci-dessus.

Un autre groupe encore de polymères comprend une ou plusieurs résines contenant des anions échangeables par $O_2^-$.

Des résines préférées sont constituées par des résines ammonium quaternaire comprenant des motifs tels que:

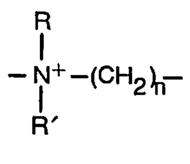 , 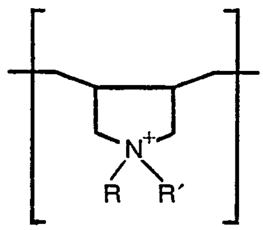 et 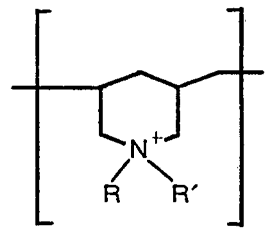

dans lesquels R et R' sont tels que définis ci-dessus.

Les anions de la résine pourront être choisis notamment parmi les anions fluorure, chlorure, hydroxyde, iodure, tétraphénylborate, carbonate ou acétate, préalablement échangés, tout ou en partie, par des anions $O_2^-$.

La résine utilisée dans le matériau polymère pourra être un homo ou un copolymère ionique, élaboré à partir d'un monomère ammonium quaternaire vinylique ou allylique, seul ou en copolymère avec d'autres monomères ammonium quaternaire allylique ou vinylique différents.

D'une manière avantageuse, l'utilisation, pour la préparation de compositions de superoxyde selon l'invention, d'un sel de tétraphénylborate et d'un sel de poly(diallyldiméthylammonium) permet d'obtenir des compositions de superoxyde conformes à l'invention avant une concentration élevée en ions $O_2^-$ et présentant à la fois une longue durée de vie et une bonne stabilité thermique.

Selon une disposition avantageuse de l'invention, le matériau polymère comprend, en outre, au moins un additif capable, notamment d'augmenter sa constante diélectrique et/ou son caractère amorphe ou, le cas échéant, de le rendre au moins partiellement amorphe lorsqu'il s'agit d'un polymère de base cristallin ou partiellement cristallin, et/ou encore de favoriser la compatibilité des constituants de la composition.

Des composés convenant à cet effet comprennent des polymères, plus spécialement du type de ceux définis ci-dessus, des agents plastifiants ou encore des sels, de préférence de faible énergie réticulaire.

Comme plastifiants, on citera les plastifiants polaires tels que les composés cyanés. Les travaux effectués montrent q'un composé qui porte des groupes cyanés du type 2,4,6-triméthoxybenzonitrile convient particulièrement.

En variante, la constante diélectrique est augmentée par mise en oeuvre de matériaux polymères comportant des groupements polaires portés par des chaînes latérales orientables. Des groupes de ce type comprennent les groupes perfluorométhylés.

Lorsque le matériau polymère comprend plusieurs polymères ou copolymères, on observe que certains superoxydes permettent d'augmenter la compatibilité des polymères. Cet effet favorable est observé par exemple avec le superoxyde de tétrabutylammonium quaternaire.

Des additifs ioniques appropriés, notamment pour augmenter ε et/ou la compatibilité du ou des polymères et/ou copolymères entre eux et/ou, le cas échéant, avec le sel de superoxyde, comprennent des sels de type $A^-NR{+}_4$ dans lequel:

—*A*⁻ est un anion tel que $ClO_4^-$, $B(C_6H_5)_4^-$, $C_nF_{2n'+1}SO_3^-$ et

—*R* représente une chaîne hydrocarbonée saturée, pouvant contenir un ou plusieurs hétéroatomes, de préférence O et N et *n'* est un entier de 1 à 10 environ.

Comme additifs neutres, on citera des composés comportant en particulier un noyau pyridine tel que la 2,2'-bipyridine.

Dans le cas où la tenue mécanique du polymère doit être renforcée, le matériau polymère défini ci-dessus se présente sous forme réticulée ou encore sous forme tramée comportant, notamment, une trame formée à partir d'un autre polymère ou copolymère inerte vis-à-vis des ions $O_2^-$.

Selon un autre mode préféré de réalisation, la matrice contenant les ions $O_2^-$ est l'association d'un liquide, éventuellement gélifié, et d'un support constitué par un matériau solide autorisant la percolation des ions $O_2^-$, c'est-à-dire la migration continue des ions $O_2^-$ d'une région à l'autre du matériau.

Des matériaux solides préférés présentent une bonne tenue mécanique et comprennent des supports, de préférence minces, par exemple à base de verre ou de céramique, tels que fibres de verre agglomérées, verre fritté ou verre poreux, ou à base de polymère mouillable, poreux ou gonflable par une solution d'imprégnation, ce polymère étant inerte vis-à-vis des constituants de la solution.

Le liquide supporté peut être un sel de superoxyde fondu ou en solution concentrée dans un solvant compatible.

Ces matériaux supportés présentent, notamment, l'avantage d'une bonne tenue mécanique, d'une forte concentration de porteurs (ions $O_2^-$) dans le support et d'une grande mobilité de ces porteurs. on évite le problème d'évaporation du solvant lorsque le solvant est à faible tension de vapeur ou gélifié.

Comme indiqué ci-dessus, la matrice forme avec le superoxyde un matériau stable aux températures considérées.

On notera que le terme "superoxyde" employé seul dans la description et les revendications désigne le sel $C^+ O_2^-$ formé avec des cations $C^+$ minéraux ou organiques.

Selon un mode préféré de réalisation de l'invention, les cations $C^+$ représente des cations minéraux.

Des superoxydes minéraux appropriés comprennent les superoxydes des métaux monovalents, plus spécialement des métaux alcalins, tels que $NaO_2$, $KO_2$, $RbO_2$ et $CsO_2$. D'autres superoxydes comprennent des superoxydes de métaux de transition sous forme de complexes.

Selon un autre mode de réalisation, particulièrement préféré en raison des propriétés de compatibilité élevée des superoxydes avec les matériaux polymères de la matrice, les cations $C^+$ représentent un ou plusieurs cations organiques. Des superoxydes de cations organiques spécialement préférés pour la mise en oeuvre de l'invention comprennent des superoxydes d'ammonium quaternaire utilisés seuls ou en mélange.

Parmi les produits de ce type, on citera les superoxydes de tétraalcoylammonium quaternaire $NR_4^+O_2^-$ dans lesquels *R* représente un radical alcoyle de préférence de 1 à 10 atomes de carbone environ.

Des superoxydes de ce type comprennent le superoxyde de tétraméthylammonium quaternaire $TMA^+O_2^-$, le superoxyde de tétrabutylammonium quaternaire $TBA^+O_2^-$ et le superoxyde de tétrahexyl-ammonium quaternaire $THA^+O_2^-$.

Le superoxyde $TMA^+O_2^-$ s'avère particulièrement avantageux en raison de sa grande stabilité (il fond vers 97°C et se décompose à une température légèrement supérieure) et de sa solubilité élevée dans plusieurs solvants organiques (environ 0,05 M dans l'acétonitrile).

Dans une variante, les groupes alcoyle des cations tétraalcoylammonium des superoxydes mis en oeuvre sont remplacés par des groupes éther, par exemple, de structure $-[(CH_2)_2-O]_n-CH_3$ dans laquelle *n* est un entier, de préférence de 1 à 5 environ.

Selon une autre variante, les superoxydes utilisés pour l'ensemencement sont solvatés par le ou les solvants mis en oeuvre pour leur préparation, le plus généralement la pyridine.

Cette solvatation conduit avantageusement à un effet favorable sur la stabilité du système.

Les compositions de l'invention sont préparées par incorporation d'anions $O_2^-$ dans une matrice telle que définie ci-dessus. Cette opération d'incorporation correspond à un ensemencement de la matrice en ions $O_2^-$.

Selon une variante de réalisation, on effectue l'incorporation par voie chimique en présence d'un solvant dans lequel la matrice et le superoxyde sont solubles ou peuvent être rendus solubles à l'aide d'additifs.

Le solvant mis en oeuvre est un solvant aprotique tel que la pyridine, le benzène ou le toluène.

Lorsque le sel de superoxyde est un sel minéral, pour faciliter la solubilisation du sel et/ou augmenter la taille des cations afin de diminuer le puits de potentiel qu'ils constituent pour les anions, on utilise selon les techniques classiques un agent complexant des cations alcalins tel qu'un éther couronne ou un cryptand.

Selon une autre variante de réalisation, l'ensemencement en $O_2^-$ est effectué par voie électrochimique par réduction cathodique d'oxygène moléculaire selon la méthode décrite dans le brevet US 3 102 140 au nom de Callery Chemical Cy.

D'une manière préférée, l'incorporation d'anions $O_2^-$ dans la matrice électrochimique est réalisée en remplaçant des anions électroactifs préexistant dans la matrice, lesdits anions étant éliminés par oxydation anodique au fur et à mesure de la création d'ions $O_2^-$ à une cathode soumise à un flux d'oxygène gazeux ou dissous.

Pour préparer les dérivés de superoxydes sous forme de membrane, on procède à l'évaporation du ou des solvants d'un mélange constitué d'une part d'une solution du matériau constituant la matrice et d'autre part d'une solution de sel de superoxyde, ces solutions étant dégazées.

L'évaporation est réalisée, de préférence, sous courant de gaz sec tel que l'azote et à température contrôlée. On utilise un support plan en un matériau inerte vis-à-vis des réactifs mis en oeuvre, par exemple, du polytétrafluoroéthylène (PTFE). Après évaporation du ou des solvants les membranes formées sont séchées.

Selon une disposition avantageuse de l'invention, qui permet d'augmenter la conductivité, la membrane est soumise à au moins une opération de recuit, de préférence à une température légèrement inférieure à la température de fusion du matériau de la matrice ensemencée, dans la mesure où le superoxyde n'est pas dégradé à cette température.

Pour améliorer la tenue mécanique du matériau polymère, on effectue un tramage du polymère de base à l'aide d'un autre polymère ou d'un copolymère selon les techniques classiques.

On peut également réticuler le matériau avant, ou, le cas échéant, après incorporation du superoxyde, notamment par irradiation ou par photoréticulation UV.

Les superoxydes de tétraalcoylammonium quaternaire $NR_4^+O_2^-$ peuvent être préparés de manière classique par électrolyse d'un halogénure de tétraalcoylammonium $NR_4^+X^-$ dans lequel *R* est tel que défini ci-dessus et $X^-$ représente un ion halogènure et réduction de l'oxygène ou, selon une autre variante, par une réaction solide-solide suivie d'un extraction, comme décrit dans Inorg. Chem. 1964, *3*, 12, 1798—9, et 1983, *22*, 18, 2577—83.

Les superoxydes $NR_4^+O_2^-$ peuvent être préparés par une réaction de métathèse entre:
a — un sel d'ammonium quaternaire dont l'anion inerte vis-à-vis
de $O_2^-$ est choisi de préférence parmi les anions $F^-$, $I^-$, $OH^-$, $NO_3^-$, $ClO_4^-$, B $Ph_4^-$, $CH_3COO^-$, $CO_3^-$ et
b — un excès de superoxyde dont le cation est un cation de métal alcalin, de préférence $K^+$ ou un cation ammonium quaternaire, de préférence $TMA^+$.
Cette métathèse peut, en effet, être effectuée comme réaction solide-solide, selon le brevet US ci-dessus, suivie d'une extraction de $NR_4^+O_2^-$ dans $NH_3$ liquide.

Conformément à une disposition originale de l'invention, la réaction de métathèse est réalisée dans un solvant organique tel que le benzène, le toluène, le cas échéant, le diméthylsulfoxyde DMSO, et de préférence, dans la pyridine.

L'étude électrochimique des compositions à base de superoxyde ci-dessus a permis de mette en évidence leurs propriétés de conduction anionique élevée et ce, de manière avantageuse, dans une gamme de température allant de l'ambiante à 100°C environ.

Ces compositions permettent plus spécialement la diffusion de l'oxygène sous forme $O_2^-$ tout en constituant une barrière imperméable aux autres gaz non ionisables dans les mêmes conditions que $O_2$.

L'invention vise donc de nouveaux matériau électrolytiques à base de compositions de superoxydes telles que définies ci-dessus.

On notera que les constituants du matériau électrolytique présentent une bonne stabilité chimique vis-à-vis de $O_2^-$ mais également vis-à-vis des espèces chimiques éventuellement produites par les réactions de $O_2^-$ avec les impuretés du matériau, en particulier vis-à-vis des espèces peroxydées (peroxydes, hydroperoxydes, peroxydates) issues de la dismutation des superoxydes. La présence de tout élément favorisant ou catalysant la dismutation des superoxydes doit donc être évitée.

Le matériau électrolytique peut être, en outre, conducteur cationique dans la mesure où les cations ne sont pas trop encombrants et où leur diffusion ne limite pas la conductivité anionique.

Selon une autre disposition de l'invention, ce matériau électrolytique est rendu conducteur électronique par exemple par incorporation de particules conductrices électroniques telles que les particules de carbone ou de magnétite $Fe_3O_4$. Ces matériaux présentent l'avantage de pouvoir être utilisés dans des dispositifs mettant en jeu une différence de pression partielle d'oxygène au lieu d'une différence de potentiel électrique.

Cette conductivité électronique n'est cependant pas souhaitable lorsqu'on utilise un générateur électrique dans le circuit, ou lorsqu'on cherche à générer une tension électrique car elle conduirait à une perte d'énergie ou à une auto-décharge.

En mettant à profit les propriétés filmogènes des matériaux de matrice, les électrolytes de l'invention sont avantageusement préparés sous forme de membranes, ce qui permet de disposer de grandes surfaces.

Des membranes préférées présentent des épaisseurs inférieures à 500 µm, en particulier de l'ordre de 10 à 500 µm, avantageusement d'environ 30 à 100 µm.

Des matériaux de matrice particulièrement avantageux pour l'élaboration de membranes transparentes homogènes comprennent un matériau polymère, en particulier, un polyoxyde d'alcoylène tel que défini ci-dessus.

Des membranes électrolytiques de conductivité élevée comprennent un copolymère, plus spécialement un copolymère statistique avec des unités OE(oxyde d'éthylène) et OP(oxyde de propylène).

Le pourcentage des motifs OP est avantageusement d'au moins environ 5%, de préférence, d'environ 40% dans le polymère dont le poids moléculaire est plus spécialement de l'ordre de 500 à 500 000.

D'autres membranes comprennent un mélange de polymères et d'un ou plusieurs additifs.

Des proportions pondérales préférées des constituants de la membrane, mélange de polymères/additifs/superoxydes, sont d'environ 6/1/2.

Des membranes avantageuses de ce type sont à base de POE et comprennent un autre polymère tel que POP, de préférence selon un rapport de 4/2 environ.

Comme composition, on citera POE/POP/additif tel que THAP(tetrahexylammonium perchlorate)/sel de superoxyde tel que $TBAO_2$ selon les proportions pondérales d'environ 3à5/2/1/2 ou encore, POE/POP/additif tel que THAP/superoxyde tel que $KO_2$/agent complexant tel que l'éther couronne 18-crown-6 selon les proportions d'environ 3à5/2/1/0.4/0.4

L'invention vise également des dispositifs ou cellules électrochimiques de transport sélectif d'oxygène mettant en jeu, comme transporteurs d'oxygène et de courant, des ions $O_2^-$ se déplaçant au sein d'un matériau électrolytique tel que défini ci-dessus.

Des cellules préférées sont caractérisées en ce qu'elles comportent le matériau électrolytique, avantageusement sous forme de membrane, confiné entre deux électrodes coextensives face contre face avec ledit film, ces électrodes étant constituées d'un matériau conducteur perméable aux gaz, poreux, inerte vis-à-vis du matériau électrolytique à température inférieure à 100°C et inoxydable au moins pour ce

qui concerne l'anode.

Les matériaux des deux électrodes sont identiques ou différents.

La chaîne électrolytique élaborée à partir des électrolytes de l'invention répond à la séquence suivante: (milieu 1) cathode/électrolyte/anode (milieu 2).

L'oxygène moléculaire du milieu 1 est réduit à la cathode à l'état d'anion $O_2^-$ par une réaction mono-électronique $O_2 + e^- \rightarrow O_2^-$ quasi-réversible en l'absence de protons dans le milieu.

L'ion $O_2^-$ diffuse dans l'électrolyte et va se décharger à l'anode selon une réaction également monoélectronique, quasi-réversible, correspondant à l'équation: $O_2^- \rightarrow e^- + O_2$. L'oxygène peut se combiner au métal ou matériau de l'anode si ce dernier est oxydable, ou se dégager sous forme gazeuse dans le cas contraire.

On remarquera avec intérêt que la réaction globale correspond au transfert d'une molécule d'oxygène pour chaque électron mis en circuit alors que quatre électrons étaient nécessaires dans la technique antérieure.

En outre, on notera qu'il ne se produit à aucun moment de coupure de la liaison oxygène-oxygène, l'ion superoxyde étant un ion moléculaire.

La mise en oeuvre de processus réversibles, tant à la cathode qu'à l'anode, permet de réduire l'énergie d'activation à apporter au système soit sous forme électrique ou sous forme thermique (gain en coût énergétique de fonctionnement), soit par des moyens catalytiques (gain en investissement).

D'une manière générale, il est ainsi possible de diminuer de manière notable les surtensions aux électrodes, d'abaisser les températures de fonctionnement et de simplifier, dans les dispositifs électrochimiques utilisés, la technologie des électrodes qui n'auront pas à assurer une électrocatalyse particulièrement délicate dans le cas des ions $OH^-$.

Les matériaux d'électrode sont spécialement choisis parmi les matériaux capables d'accélérer la réaction redox $O_2$ (adsorbé) $+ e^- \rightarrow O_2^-$ et n'entraînant pas de chimisorption dissociative de la molécule d'oxygène.

Des matériaux appropriés comprennent des matériaux perméables aux gaz à base de carbone, par exemple de carbone vitreux ou de graphite, éventuellement soutenus mécaniquement par une trame conductrice ou non, par exemple un tissu de polypropylène.

Le carbone peut être incorporé sous forme de particules et/ou de fibres dispersées dans un matériau polymère.

La matériau conducteur à base de carbone peut être également formé d'une nappe éventuellement tissée, un feutre ou un papier de carbone.

D'autres matériaux appropriés comprennent un métal peu oxydable sous une forme dispersée dans un matériau polymère ou sous forme de nappe éventuellement tissée.

Pour la cathode, le métal peut être formé d'acier recouvert d'un dépôt par exemple de platine ou de nickel.

Selon une variante de réalisation, les électrodes sont formées d'une combinaison de matériaux.

Un type de combinaison comprend une trame d'un polymère, dotée de propriétés de résistance élevée, supportant un film très mince de polymère conducteur électronique lui-même chargé de poudre de carbone vitreux ou d'un autre produit assurant un bon transfert électronique.

Selon un autre type de combinaison, les électrodes sont formées d'un ou de plusieurs matériaux leur conférant des propriétés de conduction à la fois électronique et ionique vis-à-vis de $O_2^-$.

Selon une autre variante, le dispositif électrochimique comprend, interposé entre l'électrode et l'électrolyte, un film d'un conducteur mixte, électronique et ionique, dans lequel $O_2$ est soluble, ce qui permet d'effecteur la réduction de $O_2$ dans un grand volume et non pas seulement à la surface électrode-électrolyte.

Selon encore une autre variante, les électrodes sont formées d'un système asymétrique, le côté cathodique favorisant l'écoulement de gaz pour limiter la polarisation de la phase gazeuse et restreindre les réactions d'électrode à la réduction de $O_2$ à un seul électron, et le côté anodique favorisant l'oxydation de $O_2^-$ et le départ de l'oxygène gazeux.

Des performances satisfaisantes à l'échelle industrielle sont obtenues à l'aide de dispositifs à grande surface de membranes et de compacité elevée.

Selon un procédé avantageux de mise en oeuvre, ces dispositifs se présentent sous forme de petits modules de quelques dizaines à quelques centaines de $m^2$ chacun.

Il s'agit notamment de modules cylindriques où la membrane est enroulée en spirale, du type de ceux utilisés en perméation gazeuse classique. Dans ces cylindres, les couches enroulées se succèdent avantageusement comme suit: cathode/membrane/anode/membrane/cathode. . . Les cathodes d'une part, les anodes d'autre part sont perméables aux gaz et dépassent chacune d'un côté du cylindre dans la direction axiale de façon à être reliées aux amenées de courant. La circulation des gaz s'effectue selon le mode dit à courants croisés à l'intérieur des électrodes poreuses, l'oxygène étant collecté dans l'axe du cylindre.

Un autre type de module approprié comprend la mise en forme des membranes dans les boitiers avec constitution de "sandwiches" cathode/membrane/anode, pliés en accordéon dans le boîtier constitué par exemple par des faces de matériau isolant étanches aux gaz et des faces conductrices distribuant courant et gaz.

Les modules sont groupés en série, en parallèle ou en séries parallèles.

Selon encore un autre aspect, l'invention vise un procédé de transfert sélectif d'oxygène d'un premier milieu à un second milieu selon lequel on met en oeuvre la réduction électrochimique d'oxygène conduisant à la formation transitoire d'ions $O_2^-$, la diffusion sous forme $O_2^-$ dans une matériau électrolytique tel que défini ci-dessus, qui constitue par ailleurs une barrière pratiquement complètement imperméable aux autres gaz, et l'oxydation en oxygène des ions $O_2^-$.

Dans un mode préféré de réalisation de ce procédé, on impose une différence de potentiel, à l'aide d'un générateur électrique extérieur, aux bornes des électrodes d'une cellule telle que définie ci-dessus, séparant les milieux évoqués plus haut.

L'électrode E1 utilisée comme cathode est adjacente au premier milieu et celle utilisée comme anode E2 est adjacente au second milieu.

Dans ces conditions l'oxygène du milieu 1 est consommé au niveau de l'électrode E1: une réaction électrochimique de réduction le transforme en ions $O_2^-$ qui migrent jusqu'à l'électrode E2 où se produit une réaction électrochimique inverse de la précédente (oxydation de l'anion en oxygène qui se dégage dans le milieu 2).

La bilan de cette chaîne de processus est un transfert d'oxygène du milieu 1 au milieu 2, obtenu au prix d'une consommation d'énergie électrique.

On notera qu'il est aussi possible par ce processus de comprimer de l'oxygène dans le compartiment anodique.

Selon un autre mode de réalisation, on assure le transfert sélectif d'oxygène d'un premier milieu gazeux à une pression partielle d'oxygène dite élevée dans un second milieu à pression partielle d'oxygène plus faible, en maintenant une différence de pression partielle entre les milieux considérés separés par une cellule électrochimique, telle que définie ci-dessus. Cette différence de pression partielle fournit une tension électrique E aux bornes des électrodes.

Cette tension peut être utilisée comme générateur électrique: pile de concentration fonctionnant entre deux pressions partielles d'oxygène imposées $P_1$ et $P_2$, ou pile à combustible dans le cas où l'oxygène produit à l'électrode E2 est consommé par une réaction chimique irréversible.

La tension qui apparait entre cathode et anode lorsqu'il existe une différence de pression partielle d'oxygène entre les deux milieux gazeux peut être utilisée pour faire une jauge à oxygène fonctionnant à température ambiante. Dans ce cas, la pression partielle d'oxygène de l'un des milieux sert de référence. La Loi de Nernst donne la valeur de la tension mesurée (sans débit de courant)

$$E = \frac{RT}{F} \log_e \frac{P_1}{P_2}$$

le nombre d'électrons impliqués dans la chaîne électrochimique étant ici de 1, R étant la constante des gaz parfaits, F la valeur du faraday et T la température absolue. Il faut remarquer que la tension E délivrée par ce type de jauge est 4 fois plus élevée que celle fournie par les jauges utilisant un électrolyte conducteur par ions $OH^-$ ou $O^{2-}$.

Dans un mode particulier d'utilisation, lorsqu'il existe une différence de pression partielle d'oxygène entre deux milieux gazeux séparés par la cellule électrochimique décrite ci-dessus, on relie les deux électrodes par un circuit extérieur passif comportant un conducteur de faible résistance électrique et un interrupteur. Un tel dispositif permet de contrôler (à savoir de réguler ou d'interrompre)le flux d'oxygène qui passe du milieu 1 comportant la plus forte pression partielle d'oxygène vers le milieu 2. Lorsque l'interrupteur est en position fermée, la cellule est court-circuitée et l'oxygène est transféré du milieu 1 au milieu 2 en migrant sous forme de superoxyde, les électrons mis en jeu aux électrodes circulant dans le conducteur extérieur. Lorsque l'interrupteur est en position ouverte, une tension apparaît aux électrodes, mais les électrons ne pouvant circuler dans le circuit extérieur, le flux d'oxygène entre le milieu 1 et 2 est interrompu (il est en fait limité au flux de perméation de l'oxygène moléculaire neutre à travers la membrane d'électrolyte).

Le contrôle "tout ou rien" ainsi réalisé peut être affiné par l'introduction d'une résistance variable en série dans le circuit extérieur: la mesure du courant permet de contrôler de façon trés précise le flux d'oxygène que l'on transfère du milieu 1 au milieu 2.

Il est clair que ce schéma très simple peut conduire à un véritable système asservi permettant par exemple de stabiliser ou de programmer la pression partielle d'oxygène d'un des deux milieux.

Selon encore un autre variante, si le milieu électrolytique autorise non seulement la diffusion de l'oxygène sous forme anionique mais aussi le transport d'électrons, le système peut alors fonctionner en membrane "semi-perméable" sélective pour l'oxygène. Le terme semi-perméable n'est pas pris ici dans l'acception classique de la perméation: la sélectivité de la membrane pour l'oxygène n'est pas due à une diffusion préférentielle de l'oxygène moléculaire neutre dissous mais à la présence et à la mobilité des anions oxygénés et des électrons.

Le principe général de fonctionnement est le suivant: la conductivité électronique conduit à un court-circuit partiel de la membrane. Ce court-circuit donne lieu, sous l'action d'une différence de pression partielle d'oxygène entre les deux faces de la membrane à des courants électroniques et ioniques qui

s'annulent mutuellement mais dont le bilan est un transfert d'oxygène d'un côté à l'autre de la membrane. Le flux de semi-perméabilité augmente avec la température. La conduction électronique au sein même du matériau présente l'avantage, par rapport au cas où les électrons reviennent par un circuit extérieur, de répartir uniformément le courant dans la membrane.

Plus précisément s'il existe une différence de pression partielle d'oxygène entre les deux faces de la membrane, l'oxygène peut être réduit en anion oxygéné au contact de la membrane du côté haute pression, puis migrer à travers la membrane par diffusion avant d'être oxydé en oxygène du côté basse pression. Les électrons libérés du côté basse pression peuvent alors migrer vers le côté haute pression par diffusion à travers le milieu électrolytique à conduction mixte (ionique et électronique).

La sélectivité du transfert d'oxygène assurée par les dispositifs de l'invention les rend particulièrement appropriés pour des applications concernant la séparation d'oxygène.

De telles applications comprennent la production d'oxygène par concentration à partir de l'air, notamment d'air sec, de préférence de faible teneur en gaz acides tels que $CO_2$, $SO_2$ ou $SH_2$, pour l'industrie ou dans le domaine médical, la purification de gaz contenant de l'oxygène, l'introduction de quantités contrôlées d'oxygène dans un gaz, l'analyse de milieux gazeux.

D'autres caractéristiques et avantages de l'invention sont rapportés dans les exemples qui suivent et en se référant aux figures.

La figure 1b représente le grossissement d'une partie de la cellule d'un dispositif selon l'invention représenté sur la figure 1a.

La figure 2b représente un pli de l'élément modulaire de la figure 2a du type sandwich.

La figure 3 représente ce même module en coupe.

Exemple 1

Préparation d'une composition de superoxyde à base de POE-POP/$TBAO_2$ sous forme d'une membrane.

On procède à l'élaboration d'une solution 1 de polymère et d'une solution 2 de superoxyde de tétra-n-butylammonium, en opérant comme suit:

*Solution 1*

On dissout 4 g de POE de masse moléculaire 600 000 (Aldrich), 2 g de POP (Hercules Co, sous le nom de Parel 58) et 1 g de perchlorate de tétra-n-hexylammonium (Alfa Ventron) dans une quantité suffisante de pyridine (Prolabo) pour faire 100 ml de solution. On agite fortement cette solution pendant environ 15 heures.

*Solution 2*

On mélange 1 g de fluorure de tétra-n-butylammonium (TBAF) trihydraté (Fluka) avec 2,5 g superoxyde de potassium (pureté 96,5%) (Alfa Ventron) dans une quantité suffisante de pyridine (Prolabo) pour faire 15 ml de solution. On laisse la réaction de métathèse se faire sous agitation pendant 10 à 30 minutes. On centrifuge, on récupère la partie liquide. On reprend ensuite le solide par 15 ml de pyridine. On centrifuge et on récupère la partie liquide. La solution obtenue en réunissant les deux fractions liquides, soit 30 ml en tout, contient environ 0,6 g de superoxyde de tétra-n-butylammonium.

On mélange la solution 2 avec 30 ml de la solution 1 en agitant pendant 10 à 30 minutes. On fait le vide au dessus de la solution (environ 20 mm Hg ($26.66\cdot10^{-3}$ bar)) pour évaporer environ 50% du solvant. On peut chauffer jusqu'à 35°C maximum pour accélérer l'évaporation. On obtient environ 30 ml de solution jaune, visqueuse, que l'on verse dans un godet de polytétrafluoroéthylène à fond plat. On évapore le solvant dans un courant d'azote sec pendant une durée de 12 à 15 heures.

On retourne la membrane et on continue l'évaporation pendant au moins 3 heures.

On obtient ainsi un film sous forme d'une membrane homogène jaune très pâle qui contient POE/POP/THAP/$TBAO_2$ selon les parties en poids suivantes: 4/2/1/2. La conductivité de cette membrane à 20°C est de $4 \times 10^{-7}\ \Omega^{-1}\ cm^{-1}$ et à 50°C de $5 \times 10^{-6}\ \Omega^{-1} cm^{-1}$.

Cette membrane se prête très bien au laminage entre deux rouleaux de polytétrafluoréthylène jusqu'à des épaisseurs de l'ordre de 20 µm.

Exemple 2

Variantes de préparation de la solution 2 (TBAS): Utilisation de l'anion fluorure en tant qu'anion de départ. Solvant: toluène

On ajoute 4 g de TBAF trihydraté dans 300 ml de toluène et on distille azéotropiquement à la pression ordinaire environ trois quarts du toluène. On refroidit la solution et on ajoute $Ko_2$. On agite le mélange pendant environ 8 h puis on filtre sous azote pour retirer les produits solides. On ajoute au filtrat un volume identique de cyclohexane sec. Un trouble apparaît. On refroidit à −20°C pour faire cristalliser le produit qui se forme. On redissout la quantité nécessaire de $TBAO_2$ dans la pyridine pour obtenir la solution 2.

On pourra préparer également des compositions de superoxydes de tétrabutylammonium (TBAS) en utilisant des anions de départ autres que le fluorure et moins hydratés que celui-ci, par exemple un carbonate, un iodure ou un acétate, en suivant le mode opératoire ci-après:

Utilisation du carbonate en tant qu'anion de départ

On prépare d'abord du carbonate de tétrabutylammonium (TBAC) en faisant barboter du $CO_2$ gazeux dans une solution méthanolique d'hydroxyde de tétrabutylammonium puis en évaporant le méthanol. On sèche

ensuite le TBAC cristallisé blanc, puis on redissout le TBAC dans la pyridine (une partie du produit reste en suspension) et on ajoute à cette solution un excès de superoxyde de potassium préalablement broyé. Aprés avoir agité la solution pendant quelques minutes, on filtre la solution pour séparer $KO_2$ et $K_2CO_3$ et on recueille une solution de TBAS dans la pyridine.

La réaction s'écrit:

$$(N\ Bu_4)_2CO_3 + 2\ KO_2 \xrightarrow{\text{pyridine}} 2\ N\ Bu_4\ O_2 + K_2CO_3$$

Utilisation de l'iodure en tant qu'anion de départ

Les anions $O_2^-$ et $I^-$ peuvent également s'échanger dans des cas bien particuliers où l'énergie de réseau des produits formés joue un grand rôle.

Si l'on ajoute de l'iodure de sodium ou de potassium en poudre à une solution de TMAS dans la pyridine, ou mieux dans l'acétonitrile, on observe la précipitation immédiate d'iodure de tétraméthylammonium (TMAI), l'énergie de réseau du TMAI étant très importante. Par contre, dans le diméthylsulfoxyde, TMAI est beaucoup plus soluble et la séparation de TMAI du superoxyde formé est beaucoup plus difficile. Cette précipitation rapide de TMAI dans $CH_3CN$ ouvre encore une nouvelle voie de préparation du TBAS et d'autres superoxydes d'ammonium quaternaire.

Il suffit en effet d'échanger $O_2^-$ et $I^-$ entre TMAS et l'iodure de tétrabutylammonium TBAI dans $CH_3CN$. Le TMAI précipite et, après filtration, on recueille une solution de TBAS dans $CH_3CN$. La réaction est la suivante:

$$N\ Me_4\ O_2 + N\ Bu_4\ I \xrightarrow{CH_3CN} N\ Me_4\ I + N\ Bu_4O_2$$

Ces réactions avec les iodures ne peuvent s'appliquer en présence de iodhydrate. Les ammoniums doivent bien être quaternaires (4 chaînes autres que H sur l'atome d'azote).

Utilisation de l'acétate comme anion de départ

On peut préparer également des solutions de superoxydes d'ammoniums quaternaires à partir des acétates correspondants. Par exemple, dans le cas de $N\ Bu_4\ O_2$, la méthode de préparation est la suivante:

On fabrique d'abord l'acétate de tétrabutylammonium en versant goutte à goutte de l'acide acétique glacial dans une solution méthanolique d'hydroxyde de tétrabutylammonium jusqu'à ce que le pH atteigne environ 4. On chasse le méthanol dans un évaporateur rotatif sans dépasser 50°C puis on verse sur le précipité un peu d'acétonitrile que l'on chasse à nouveau.

On met ensuite l'acétate dans la pyridine et on ajoute du $KO_2$ broyé. L'acétate est insoluble dans la pyridine, tout comme le $KO_2$, mais l'échange entre les anions $O_2^-$ et $CH_3COO^-$ a lieu puis-que la solution se colore en jaune assez rapidement et contient du superoxyde de tétrabutylammonium.

La reaction, qui s'écrit:

$$N\ Bu_4\ CH_3\ COO + KO_2 \xrightarrow{\text{pyridine}} N\ Bu_4\ O_2 + CH_3\ COO\ K$$

n'est cependant pas quantitative.

Les méthodes décrites ci-dessus sont relativement douces puisque les réactions se produisent à la température ambiante et n'impliquent donc pas de dégradation rapide des superoxydes en solution en cours de leur préparation. Toutefois, on pourra extraire les superoxydes d'ammonium de la solution dans laquelle ils ont été préparés, de manière à les isoler des différents constituants (anions, solvants . . .) du milieu réactionel, ceux-ci pouvant provoquer une dégradation lente du superoxyde.

Exemple 3

Préparation d'une composition de superoxyde à base de chlorure de poly(diallyldiméthylammonium)

Les réactifs utilisés sont:

- Le chlorure de poly(diallyldiméthylammonium) (abréviation PDADMAC) à 15% en solution dans l'eau (réf 6515 de Polysciences, Warrington, Pennsylvanie, Etats-Unis).
- Le tétraphénylborate de sodium (réf 72020 Fluka-CH)
- Solution de superoxyde de tétrabutylammonium dans la pyridine préparée par métathèse entre le fluorure de tétrabutylammonium pentahydraté et le superoxyde de potassium
- Pyridine (Prolabo-France)

On prépare d'abord le tétraphénylborate de poly(diallyldiméthylammonium) (abréviation PDADMA-TPB) par échange des ions $Cl^-$ et $BPh_4^-$ dans l'eau suivant la réaction:

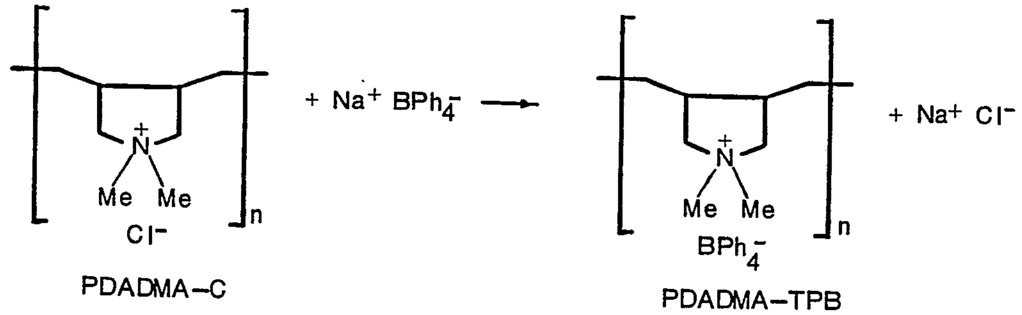


PDADMA-C PDADMA-TPB

Le PDADMA-TPB précipite quantitativement sous forme de poudre blanche. On le sèche par chauffage à 60°C sous vide pendant 24 h. Le remplacement des ions $Cl^-$ par les ions $BPh_4^-$ est réalisé presque à 100%.

On dissout le PDADMA-TPB sec dans la pyridine (ou le DMSO) à 20°C puis on verse dans la solution obtenue une solution de superoxyde de tétrabutylammonium $N(C_4H_9)_4O_2$. Le superoxyde de poly(diallyldiméthylammonium)(abréviation PDADMA-S) précipite sous forme de poudre blanchâtre. On le sèche sous vide à 20°C.

Le pourcentage total d'anions $Cl^-$ ou $BPh_4^-$ substitues par $O_2^-$ est mesuré en dosant les ions $O_2^-$ par volumétrie. On mesure le volume d'oxygène dégagé lorsqu'on fait réagir le produit solide et sec obtenu avec une solution aqueuse de chlorure ferrique $FeCl_3$ (1M) et d'acide chlorhydrique (1M). la reaction globale est la suivante:

$$2\,O_2^- + 2\,H^+ \rightarrow H_2O + 3/2\,O_2$$

Les mesures effectuées montrent que dans le PDADMA-S obtenu par deux méthathèses successives, environ 60% des anions présents dans le polymère sont des anions $O_2^-$, les anions restants étant des $BPh_4^-$ (puisque le premier échange d'ions est quasi total). Ceci correspond à environ 2,5 milliéquivalents de $O_2^-$ par gramme de polymère bien que la masse molaire des anions $BPh_4^-$ soit très élevée.

Le PDADMA-S, conservé sous vide à 20°C, reste intact pendant plusieurs semaines et son aspect physique n'est pas modifié jusqu'à 170°C (test au banc de Kofler). Cette stabilité thermique est nettement supérieure à celle du superoxyde de tétraméthylammonium (TMAS) qui fond à 97°C et se décompose vers 100°C. Le polyammonium quaternaire ainsi préparé, dont 60% environ des anions sont des anions $O_2^-$ (les autres anions sont $Cl^-$ et $BPh_4^-$), présente une excellente stabilité thermique et a une très longue durée de vie.

Pour rendre les ions $O_2^-$ mobiles dans le polymère, on plastifie PDADMA-S par des polymères de faible masse (entre 400 et 1200 environ) qui solvatent les ions $O_2^-$ de façon à séparer ceux-ci de leurs contre-ions appartenant au squelette. Ces plastifiants peuvent être choisis, par exemple, parmi les polymères capables de solvater les ions $O_2^-$ par liaison hydrogène, par exemple la polyéthylèneimine, préparée par hydrolyse alcaline de la polyoxazoline selon la méthode décrite par T. SAEGUSA et al, J. Am. Chem. Soc. (1985), 107, p 3823—3828.

Le PDADMA-S peut également être rendu amorphe par d'autres moyens tels que:

- Le remplacement des groupes méthyle par des groupes ayant plusieurs maillons $—CH_2—$, par exemple butyle ou hexyle.
- La copolymérisation du chlorure de diallyldiméthylammonium avec un vinyl-ether ou un autre monomère vinylique compatible avec les ions $O_2^-$ (exemple: méthyl-vinyl-ether perfluoré).

Exemple 4

Film à base de POP/$TBAO_2$

On procède comme dans l'exemple 1, en soumettant une solution de POP (3 parties en poids) et une solution de $TBAO_2$ (1 partie en poids) à une opération de coévaporation.

La membrane obtenue se présente sous forme d'une pâte collante dont on améliore la tenue mécanique à l'aide d'une trame non tissée de polypropylène introduite avant évaporation.

Exemple 5

Transfert d'oxygène à travers une membrane ensemencée en anions $O_2^-$, par application d'une tension électrique aux bornes d'une cellule électrochimique montée avec cette membrane

Les essais ont été effectués avec le montage représenté sur la figure 1a. La figure 1b représente un grossissement en coupe d'une partie de la cellule électrochimique.

La membrane (1) dont la préparation et la composition sont décrites dans l'exemple 1, a un diamètre de 60 mm et une épaisseur voisine de 150 µm. Elle est pressée entre deux nappes non tissées de carbone (2a) et (3a) (International Paper) qui jouent le rôle d'électrodes poreuses. Le sandwich nappe de carbone-membrane-nappe de carbone est lui-même pressé entre les disques en acier inoxydable fritté (17) et (18).

La chambre (19) qui comporte des conduits d'arrivée et de sortie des gaz (20) et (21) a un volume d'environ 50 $cm^3$ et joue le rôle de compartiment cathodique.

La chambre (22) est reliée par le conduit de sortie de gaz (23) à un capteur de pression et son volume total, c'est-à-dire incluant les tubulaires, connections et le volume mort du capteur est de 3 $cm^3$. Elle joue le rôle de compartiment anodique.

L'ensemble de la cellule est thermostaté à 48.0 + 0.1°C par circulation d'eau dans les blocs de laiton (24) et (25).

Avant la mise en route du dispositif, la chambre (19) est remplie d'oxygène sous 1 bar et la chambre (22) est remplie d'oxygène sous 1005 mbar. Les deux compartiments sont rigoureusement étanches.

Après stabilisation de la température et de la pression on applique une différence de potential électrique de −0.8 V entre cathode et anode. L'intensité de courant est de 300 μA au début de l'expérience et se stabilise rapidement vers 60 μA.

Après passage d'une quantité d'électricité de $1.67 \times 10^{-1}$ C mesurée, en 30 minutes, par un coulomètre, on constate que la pression dans la chambre (22) est passée de 1005 à 1017 mbar, ce qui correspond à la production de $1.37 \times 10^{-6}$ mole d'oxygène pour $1.73 \times 10^{-6}$ Faraday ayant traversé la cellule. Le rapport faradique, voisin de 1, indique que le transfert d'oxygène a donc été réalisé par l'intermédiaire d'anions superoxyde $O_2^-$.

### Exemple 6

Module de type accordéon utilisé comme dispositif électrochimique pour séparer d'oxygène de l'air

Les figures *2a* et *2b* concernent une variante d'un dispositif modulaire de type accordéon et représentent respectivement une vue en arraché d'un module et le détail d'un repli en coupe.

Le module est composé d'un ensemble membrane électrolytique-électrodes (1, 2, 3) replié en accordéon à l'intérieur d'un boitier parallélipédique étanche comportant quatre faces isolantes (4, 5, 6, 7) et deux faces conductrices (8, 9) servant à la fois d'amenées de courant et de gaz. La membrane (1) du type de celle décrite dans l'exemple 1 est pressée en sandwich entre deux nappes de matériau d'électrode poreux (2) et (3) par exemple du tissu de graphite. Le film composite ainsi formé est plié en accordéon. Il est utile d'intercaler, entre les plis, des couches (14) d'un matériau conducteur électrique très facilement perméable aux gaz, par exemple, une grille métallique ondulée, dont le rôle est, d'une part, de maintenir entre les replis du film un espace permettant une circulation ainsée des gaz et d'un optimiser le trajet, d'autre part, de fournir des contacts électriques bien répartis à la surface des électrodes.

Les deux extrémités de l'empilement ainsi réalisé perpendiculairement aux plis (10 et 11) sont rendues étanches aux gaz, par exemple, en les noyant dans une résine isolante électrique du type époxy ou silicone. Elles sont appliquées de façon étanche contre les deux faces (4) et (5) du boîtier.

Par ailleurs, chacune des extrémités du composite membrane-électrodes parallèles aux plis (1 et 13) est raccordée de façon étanche et sur toute leur longueur à l'une des plaques isolantes (6 et 7) du boîtier.

La figure *2b* permet d'observer comment chacune des nappes d'électrodes (2) et (3) entourant le film électrolytique (1) est en contact électrique au niveau des plis avec l'une des deux faces conductrices (8) et (9).

La figure *3* représente un coupe du module dans le plan perpendiculaire aux plis situé au niveau des conduits de gaz (15) et (16).

Elle montre aussi comment le système boîtier/film composite en accordéon délimite deux regions *A* et *B* isolées l'une de l'autre vis-à-vis des gaz électriquement.

Des canaux sont aménagés dans les faces (8) et (9), de façon à faire communiquer chacun des compartiments *A* et *B* avec les embouts (15), (15') et (16), (16') respectivement, embouts raccordables à des circuits gazeux extérieurs.

Le module ainsi construit est utilisé pour produire de d'oxygène pris à partir de l'air. Le mode de fonctionnement est le suivant: de l'air faiblement comprimé pour vaincre les pertes de charge (~ 1,1 Bar absolu) circule dans le compartiment *A,* l'entrée se faisant par l'embout (15), la sortie par l'embout (15'). Les plaques (8) et (9) sont connectées respectivement aux bornes — et + d'un générateur de courant continu pouvant délivrer une tension d'environ 1 V entre ces plaques. La plaque (8) distribue le courant sur l'électrode (2) le long des plis qui lui sont adjacents et grâce aux couches intercalaires conductrices (14) internes au compartiment *A.*

De même la plaque (9) distribue le courant sur l'électrode (3) le long des plis qui lui sont adjacents et grâce aux couches intercalaires conductrices (4) internes au compartiment *B.*

L'oxygène de l'air circulant dans le compartiment *A* est réduit en anions superoxyde au niveau de la nappe d'électrodes (2) (cathode). L'azote, qui ne subit aucune réaction électrochimique est purgé de façon continue par la sortie 15' où l'on obtient un air appauvri en oxygène.

Les anions superoxyde qui ont migré au travers de la membrane (1) sont oxydés au niveau de l'anode (3) en produisant de d'oxygène qui se dégage sous forme gazeuse dans le compartiment *B* et peut être recueilli à l'une des sorties (16) ou (16').

De tels modules peuvent être aisément assemblés en série ou en parallèle selon les caractéristiques du générateur de courant dont on dispose.

Exemple 7

Application du dispositif de l'exemple 3 comme jauge à oxygène

On utilise un dispositif du type de celui selon l'exemple 3 renfermant comme électrolyte POE/POP/THAP/TBAO₂ à raison de 4/2/1/3 parties en poids.

On opère à 20°C sur des disques de membranes de 3 $cm^2$ de surface et de 150 microns environ d'épaisseur. La membrane ainsi réalisée est légèrement pressée entre deux disques de tissu de carbone conducteur du type de celui commercialisé par la Société le Carbone Lorraine sous la référence TCS 80 (ou encore TCM 128) ou celui commercialisé par la Société International Paper. Les disques de carbone sont eux-mêmes tenus en place par deux grilles d'acier inoxydable recouvert d'or par pulvérisation cathodique, minces, qui sont reliés au circuit de mesure (voltmètre numérique).

Ce dispositif est sensible à toute différence de potential chimique, (dans le cas présent de pression partielle d'oxygène), entre les milieux amont et aval séparés par la membrane, et fournit une différence de potentiel aux bornes des électrodes. On a constaté l'apparition d'une différence de potentiel de 39 plus ou moins 1 mV lorsque le milieu amont est constitué par de l'oxygène pur sous une pression de 1 bar, tandis que le milieu aval est constitué d'un mélange d'azote (78,91%) et d'oxygène (21,09%) sous 1 bar de pression totale. La valeur de cette différence de potential est très proche de la valeur théorique de 39,3 mV calculée d'après le Loi de Nernst pour un tansfert monoélectronique. Il en résulte que l'on observe bien une réduction d'oxygène en $O_2^-$ du côté haute pression et une oxydation d'$O_2^-$ en $O_2$ du côté basse pression de la membrane. On obtient 90% de la réponse en moins de 10 secondes lorsque l'on passe de l'air à l'oxygène pur.

L'expérience est couramment réalisée en maintenant l'un des côtés de la membrane sous balayage d'oxygène pur tandis que l'autre côté est alternativement soumis à un balayage d'oxygène pur et d'un autre gaz dont on veut mesurer la teneur en oxygène.

**Revendications**

1. Compositions solides à base de superoxyde, comprenant:
— un matériau inerte vis-à-vis des anions superoxydes $O_2^-$, jouant le rôle de matrice à l'égard de ces anions,
— en l'absence de tout potentiel appliqué, des anions $O_2^-$ à une concentration d'au moins environ $10^{-2}$ milliéquivalent par gramme, notamment d'au moins environ 1 à 2 milliéquivalents par gramme, ces compositions formant un matériau stable, jusqu'à une température ne dépassant pas 100°C environ, la matrice permettant la mobilité des ions $O_2^-$ dans ce domaine de température.

2. Compositions selon la revendication 1, caractérisées en ce qu'elles se présentent sous forme de membrane dont l'épaisseur est de préférence inférieure à 500 u environ, avantageusement de l'ordre de 10 à 500 µ, avantageusement d'environ 30 à 100 µ,

3. Compositions selon l'une des revendications 1 et 2, caractérisées en ce qu'elles renferment des sels de superoxyde $C^+O_2^-$, $C^+$ représentant un cation minéral, en particulier, de métal monovalent, plus spécialement de métal alcalin tel que $Na^+$, $K^+$, $Rb^+$ et $Cs^+$ ou de métal de transition sous forme de complexe.

4. Compositions selon l'une quelconque des revendications 1 à 3, caractérisées en ce qu'elles renferment des sels de superoxyde $C^+O_2^-$, $C^+$ représentant un ou plusieurs cations organiques, en particulier, un cation ammonium quaternaire, plus spécialement tétraalcoylammonium quaternaire $NR_4^+$ où *R* représente un radical alcoyle de 1 à 10 atomes de carbone environ, de préférence $TMA^+$, $TBA^+$ ou $THA^+$.

5. Compositions selon la revendication 4, caractérisées en ce que les groupes alcoyle des cations de tétraalcoylammonium sont substitués par des groupes éther par exemple, par des groupes de structure $[—(CH_2)_2—O]_n—CH_3$ dans laquelle *n* est un entier, de préférence de 1 à 5 environ.

6. Compositions selon l'une quelconque des revendications 1 à 5, caractérisées en ce que le matrice est à base d'un matériau macromoléculaire.

7. Compositions selon la revendication 6, caractérisées en ce que le matériau macromoléculaire est à base d'un matériau polymère au moins partiellement amorphe aux températures de mise en oeuvre, possédant une constante diélectrique élevée et formant avec le superoxyde une phase dont la température de transition vitreuse Tg est inférieure de 50°C environ à la température de mise en oeuvre.

8. Compositions selon la revendication 7, caractérisées en ce que le matériau polymère est neutre ou chargé, comprenant plus spécialement une majorité de sites cationiques, et est formé d'un seul type de polymère ou de copolymère, ou renferme un mélange de plusieurs polymères et/ou copolymères.

9. Compositions selon la revendication 8, caractérisées en ce que le matériau polymère comprend des polyoxydes d'alcoylène, des polyamides, des polyphosphazènes ou des polyalcoyléneimines.

10. Compositions selon la revendication 9, caractérisées en ce que les polyoxydes d'alcoylène comprenent le polyoxyde de propylène (POP) et le polyoxyde d'éthylène (POE).

11. Compositions selon la revendication 9, caractérisées en ce que les polyphosphazènes comprennent des groupements éther et satisfont plus spécialement à une formule du type

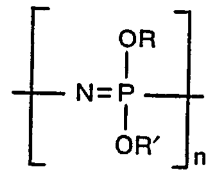

dans laquelle *R* et *R'* représentent des chaînes hydrocarbonées saturées, comprenant éventuellement un ou plusieurs hétéroatomes de préférence O et N, éventuellement associées à des groupes aromatiques, et *n* est le nombre de motifs dans le polymère.

12. Compositions selon la revendication 9, caractérisées en ce que les polyphosphazènes comprennent des groupements porteurs de fonctions amine secondaire, amine tertiaire ou ammonium quaternaire seules ou en combinaison et satisfont plus spécialement à des formules du type

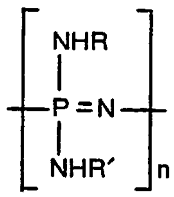

ou

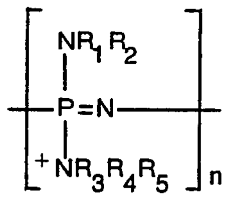

dans lesquelles R, R', $R_1$, $R_2$, $R_3$, $R_4$ et $R_5$ sont définis de la même façon que R et R' dans la revendication 11.

13. Compositions selon la revendication 9, caractérisées en ce que les polyamides comprennent des motifs du type

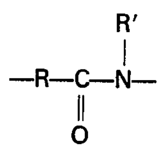 dans lesquels *R* et *R'* sont tels que définis dans la revendication 11.

14. Compositions selon la revendication 9, caractérisées en ce que les polyalcoylèneimines comprennent en particulier des polyéthylèneimines substitués comprenant des motifs du type

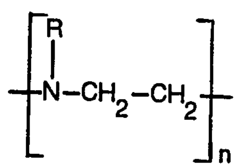

*R* étant tel que défini dans la revendication 11.

15. Compositions selon l'une quelconque des revendications 8 à 14, caractérisées en ce que les polymères comportant des chaînes latérales de substitution, étant entendu que celles-ci conservent le caractère inerte vis-à-vis de $O_2^-$ de la matrice, en particulier des chaînes perfluoroalcoyle.

16. Compositions selon la revendication 8, caractérisées en ce que le matériau polymère comporte des sites greffés, chargés ou non, permettant la solvatation transitoire de $O_2^-$, tels que des groupes constitués par les motifs des polymères selon l'une quelconque des revendications 10 à 15, des groupes pyridyle, ou encore du type sulfonamide

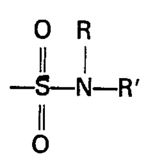

*R* et *R'* étant tels que définis dans la revendication 12.

17. Compositions selon la revendication 8, caractérisées en ce que le matériau polymère comprend une ou plusieurs résines échangeuses d'anions, de préférence une ou plusieurs résines ammonium quaternaire, comprenant des motifs tels que:

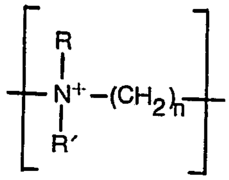
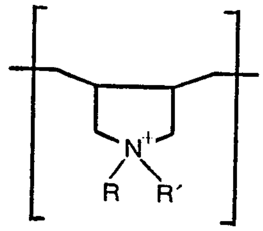
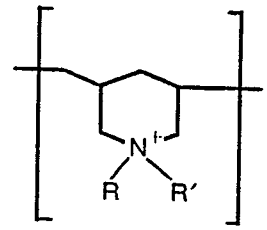

dans lesquels R et R′ sont tels que définis dans la revendication 11, les anions de la résine choisis notamment parmi les anions fluorure, chlorure, hydroxyde, iodure, tétraphénylborate, carbonate ou acétate, ayant été préalablement échangés, tout ou en partie, par des anions $O_2^-$.

18. Compositions selon la revendication 17, caractérisées en ce que la résine est un homo ou copolymère ionique élaboré à partir d'un monomère ammonium quaternaire vinylique ou allylique, seul ou en copolymère avec d'autres monomères ammonium quaternaire allyliques ou vinyliques différents.

19. Compositions selon l'une quelconque des revendications 6 à 18, caractérisées en ce qu'elles comprennent, en outre, au moins un additif capable, notamment, d'augmenter la conductivité ionique du matériau de matrice, choisi en particulier dans le groupe comprenant

a/ des polymères plus spécialement du type définis dans l'une quelconque des revendications 8 à 16,

b/ des agents plastifiants, tels que des plastifiants polaires, comme les composés cyanés, en particulier, un composé contenant ces groupes du type 2,4,6-triméthoxybenzonitrile, ou encore

c/ des sels, notamment du type $A^-NR_4^+$ dans lequel:

$A^-$ est un anion tel que $ClO_4^-$, $B(C_6H_5)_4^-$, $C_{n'}F_{2n'+1}SO_3^-$ *R* étant tel que défini dans la revendication 12, et *n′* est un entier de 1 à 10 environ, ou

d/ des additifs neutres en particulier des composés comportant un noyau pyridine tel que la 2,2′-bipyridine.

20. Compositions selon l'une quelconque des revendications 6 à 19, caractérisées en ce que le matériau polymère se présente sous forme réticulée ou sous forme tramée, comportant notamment une trame formée à partir d'un autre polymère ou copolymère inerte vis-à-vis des ions $O_2^-$.

21. Compositions selon l'une quelconque des revendications 1 à 5, caractérisées en ce que la matrice contenant les ions $O_2^-$ est l'association d'un liquide, éventuellement gélifié, et d'un support constitué par un matériau solide autorisant la percolation des ions $O_2^-$.

22. Compositions selon la revendication 21, caractérisées en ce qu'elles comprennent des supports de préférence minces, par exemple, à base de verre ou de céramique, tels que fibres de verre agglomérées, verre fritté ou verre poreux, ou à base de polymère mouillable, poreux ou gonflable par une solution d'imprégnation, ce polymère étant inerte chimiquement vis-à-vis des constituants de la solution.

23. Compositions selon la revendication 20, caractérisées en ce que le liquide supporté est un sel de superoxyde fondu ou en solution concentrée dans un solvant compatible.

24. Procédé de préparation des compositions selon l'une quelconque des revendications 1 à 23, caractérisé en ce qu'il comprend l'incorporation d'anions $O_2^-$ dans une matrice telle que définie dans les revendications précédentes, cette incorporation étant effectuée par voie chimique en présence d'un solvant dans lequel la matrice et le superoxyde sont solubles ou peuvent être rendus solubles à l'aide d'additifs, avantageusement un solvant organique tel que la pyridine ou le benzène, ou en variante, par voie électrochimique, dans laquelle on réalise l'accumulation d'anions $O_2^-$ dans une matrice électrolytique par remplacement d'autres anions électroactifs préexistant dans la matrice, ceux-ci étant éliminés par oxydation anodique au fur et à mesure de la création d'ions $O_2^-$ à une cathode soumise à un flux d'oxygène gazeux ou dissous.

25. Procédé selon la revendication 24, caractérisé en ce que pour préparer les compositions de superoxydes sous forme de membrane, on procède à l'évaporation du ou des solvants d'un mélange constitué, d'une part d'une solution du matériau constituant la matrice et, d'autre part, d'une solution du sel de superoxyde, ces solutions étant dégazées, puis on sèche la membrane formée de préférence sous courant de gaz inerte à température contrôlée et on effectue avantageusement un recuit de préférence à une température proche de la fusion du matériau de matrice dans la mesure où le superoxyde n'est pas dégradé à cette température.

26. Procédé de préparation de superoxydes d'ammonium quaternaires utilisables dans le procédé selon la revendication 24, caractérisé en ce qu'on fait réagir, en milieu solvant organique, notamment dans de la pyridine

a/ un sel d'ammonium quaternaire dont l'anion inerte vis à vis de $O_2^-$ est choisi de préférence parmi les anions $F^-$, $I^-$, $OH^-$, $NO_3^-$, $ClO_4^-$, $BPh_4^-$, $CH_3COO^-$, $CO_3^{--}$

b/ un excès de superoxyde dont le cation est un cation de métal alcalin de préférence $K^+$ ou un cation ammonium quaternaire de préférence $TMA^+$.

27. Matériaux électrolytiques, caractérisés en ce qu'ils sont à base de compositions de superoxydes selon l'une quelconque des revendications 1 à 23.

28. Matériaux selon la revendication 27, caractérisés en ce qu'ils comportant en outre des particules conductrices électroniques telles que des particules de carbone ou de magnétite $Fe_3O_4$, ces particules étant

en concentration suffisante pour conférer auxdits matériaux une conductivité électronique à la température d'utilisation.

29. Matériaux selon les revendications 27 ou 28 caractérisés en ce qu'ils renferment un matériau polymère, en particulier, un polyoxyde d'alcoylène tel que défini dans la revendication 10.

30. Matériaux selon la revendication 29, caractérisés en ce qu'ils comprennent un copolymère, plus spécialement un copolymère statistique avec des unités OE et OP, avantageusement au moins 5% de OP, de préférence 40% environ, le poids moléculaire du copolymère étant de l'ordre de 5000 à 500.000.

31. Matériaux selon l'une quelconque des revendications 27 à 30, caractérisés en ce qu'ils se présentent sous forme de membranes comprenant un mélange de polymères et un ou plusieurs additifs, en particulier, un mélange de polymères/additifs/superoxyde, selon des proportions pondérales de 6/1/2 environ, le mélange de polymères étant en particulier à base de POE, et d'un autre polymère tel que POP, de préférence selon un rapport de 4/2.

32. Materiaux selon la revendication 31, caractérisés en ce que les membranes comprennent [POE/POP/additif tel que THAP/superoxyde tel que $TBAO_2$], selon les proportions pondérales d'environ [3à5/2/1/2] ou encore [POE/POP/additif tel que THAP/superoxyde minéral tel que $KO_2$/agent complexant tel qu'éther couronne 18-crown-6]selon les proportions pondérales [3à5/2/1/0,4/0,4].

33. Cellules électrochimiques de transfert d'oxygène caractérisées en ce qu'elles mettent en jeu, comme transporteurs sélectifs d'oxygène et de courant, des ions $O_2^-$ se déplaçant au sein d'une matrice d'un matériau électrolytique selon l'une quelconque des revendications 27 à 32.

34. Cellules électrochimiques selon la revendication 33, caractérisées en ce qu'elles comportant le matériau électrolytique, avantageusement sous forme de membrane, confiné entre deux électrodes coextensives face contre face avec ledit film, ces électrodes étant constituées d'un matériau conducteur perméable aux gaz, inerte vis-à-vis du matériau electrolytique à température inférieure à 100°C et inoxydable au moins pour ce qui concerne l'anode, ce matériau étant identique ou différent pour les deux électrodes.

35. Cellules électrochimiques selon la revendication 34, caractérisées en ce que les matériaux d'électrode sont à base de carbone.

36. Cellules électrochimiques selon la revendication 34, caractérisées en ce que l'une au moins des électrodes est formée d'une combinaison de matériaux, notamment, d'une trame d'un polymère doté de propriétés de résistance élevée, supportant un film très mince de polymère conducteur électronique lui-même chargé de poudre de carbone vitreux ou d'un autre produit assurant un bon transfert électronique, ou encore d'un ou de plusieurs matériaux leur conférant des propriétés de conduction à la fois électronique et ionique vis-à-vis de $O_2^-$.

37. Cellules électrochimiques selon l'une quelconque des revendications 33 à 36 caractérisées en ce qu'elles comportant un conducteur mixte électronique et ionique, interposé entre l'électrode et l'électrolyte, dans lequel $O_2$ est soluble.

38. Cellules électrochimiques selon l'une quelconque des revendications 33 à 37 caractérisées en ce qu'elles se présentent sous forme de petits modules de quelques dizaines à quelques centaines de m2 chacun, notamment de modules cylindriques où la membrane est enroulée en spirale, du type de ceux utilisés en perméation gazeuse classique, ou de modules comprenant les membranes pliées en accordéon dans un boitier, ces modules étant montés en série, en parallèle ou en séries parallèles.

39. Procédé de transfert sélectif d'oxygène d'un premier milieu à un second milieu, caractérisé en ce qu'on met en oeuvre la réduction électrochimique d'oxygène conduisant à la formation transitoire d'ions $O_2^-$, la diffusion d'oxygène sous forme $O_2^-$ dans un matériau électrolytique selon l'une quelconque des revendications 27 à 32 ce matériau constituant une barrière pratiquement complètement imperméable aux gaz, et l'oxydation en oxygène des ions $O_2^-$.

40. Procédé selon la revendication 39, caractérisé en ce qu'on impose une différence de potentiel, à l'aide d'un générateur électrique extérieur, aux bornes des électrodes d'une cellule telle que définie dans l'une quelconque des revendications 33 à 38 séparant les premier et second milieux.

41. Procédé selon la revendication 39, caractérisé en ce qu'on utilise une cellule électrochimique selon l'une quelconque des revendications 33 à 38 dans laquelle les deux électrodes sont reliées par un circuit extérieur passif comportant un interrupteur et un système à résistance variable et qu'on maintient entre les deux faces du matériau électrolytique de la cellule une différence de pression partielle d'oxygène, ce qui permet de réguler ou d'interrompre le flux d'oxygène transféré du milieu de pression partielle élevée en oxygène au milieu de pression partielle plus basse.

42. Procédé de transfert sélectif d'oxygène d'un premier milieu gazeux à pression partielle d'oxygène dite élevée vers un second milieu à pression partielle d'oxygène plus faible, caractérisé en ce que l'on maintient une différence de pression partielle d'oxygène entre lesdits milieux séparés par une membrane comportant un matériau selon la revendication 28.

43. Procédé de mesure de pression partielle d'oxygène dans un gaz,
caractérisé par la mesure d'une différence de potential électrique apparaissant aux bornes des électrodes d'une cellule électrochimique selon l'une quelconque des revendications 33 à 37 et séparant deux milieux, avec maintien d'une pression partielle d'oxygène de référence dans un premier milieu adjacent à une électrode et admission dun gaz à pression partielle d'oxygène à mésurer dans le second milieu adjacent à l'autre électrode.

44. Procédé de transfert sélectif d'oxygène d'un premier milieu gazeux à pression partielle d'oxygène dite élevée dans un second milieu à pression partielle d'oxygène plus faible, caractérisé en ce qu'on maintient une différence de pression partielle entre les milieux considérés séparés par une cellule électrochimique selon l'une quelconque des revendications 33 à 38 et que la tension électrique générée aux bornes des électrodes est utilisée comme source d'énergie électrique.

45. Application du procédé de transfert sélectif d'oxygène selon l'une quelconque des revendications 39 à 42, à la séparation d'oxygène, en vue notamment de la production d'oxygène par concentration à partir de l'air, pour l'industrie ou dans le domaine médical, de la purification de gaz contenant de l'oxygène et de l'introduction de quantités contrôlées d'oxygène dans un gaz.

**Patentansprüche**

1. Feste Verbindungen auf der Grundlage von Superoxid, enthaltend:
— ein Material, welches gegenüber Superoxidanionen $O_2^-$ inert ist und für diese Anionen die Funktion einer Grundmasse übernimmt,
— in Abwesenheit jedes angelegten Potentials Anionen $O_2^-$ in einer Konzentration von wenigstens ca. $10^{-2}$ Milliäquivalent je Gramm, insbesondere wenigstens ca. 1 bis 2 Milliäquivalent je Gramm, wobei diese Verbindungen bis zu einer Temperatur nicht über ca. 100°C ein stabiles Material bilden und die Grundmasse eine Bewegung der Ionen $O_2^-$ in diesem Temperaturbereich zuläßt.

2. Verbindungen nach Anspruch 1, dadurch gekennzeichnet, daß sie die Form einer Membran haben, deren Dicke vorzugsweise unter ca. 500 µ beträgt und vorteilhafterweise in der Größenordnung von 10 bis 500 µ, vorzugsweise ca. 30 bis 100 µ, liegt.

3. Verbindungen nach einem der Ansprüche 1 und 2, dadurch gekennzeichnet, daß sie Superoxidsalze $C^+O_2^-$ enthalten, wobei $C^+$ ein mineralisches Kation darstellt, insbesondere eines einwertigen Metalls, insbesondere eines alkalischen Metalls wie z.B. $Na^+$, $K^+$, $Rb^+$ und $Cs^+$ oder eines Übergangsmetalls in Komplexform.

4. Verbindungen nach einem der Ansprüche 1 bis 3, dadurch gekennzeichnet, daß sie Superoxidsalze $C^+O_2^-$ enthalten, wobei $C^+$ eines oder mehrere organische Kationen darstellt, insbesondere ein quaternäres Ammonium- kation, speziell quaternäres Tetraalkylammonium $NR_4^+$, wobei *R* ein Alkylradikal von ca. 1 bis 10 Kohlenstoffatomen darstellt, vorzugsweise $TMA^+$, $TBA^+$ oder $THA^+$.

5. Verbindungen nach Anspruch 4, dadurch gekennzeichnet, daß die Alkylgruppen der Tetraalkylammoniumkationen durch Äthergruppen substituiert werden, z.B. durch Gruppen mit der Struktur $[-(CH_2)_2-O]_n-CH_3$, wobei n eine ganze Zahl, vorzugsweise von ca. 1 bis 5, ist.

6. Verbindungen nach einem der Ansprüche 1 bis 5, dadurch gekennzeichnet, daß die Grundmasse auf einem makromolekularen Material basiert.

7. Verbindungen nach Anspruch 6, dadurch gekennzeichnet, daß das makromolekulare Material auf einem polymeren, gegenüber den Einsatztemperaturen zumindest teilweise amorphem Material basiert, welches eine hohe Dielektrizitätskonstante aufweist und mit dem Superoxid eine Phase bildet, deren Glasumwandlungstemperatur Tg um ca. 50°C unter der Einsatztemperatur liegt.

8. Verbindungen nach Anspruch 7, dadurch gekennzeichnet, daß das polymere Material neutral oder angereichert ist und insbesondere eine Mehrzahl kationischer Bereiche aufweist und aus einem einzigen Polymer- oder Copolymertyp besteht oder ein Gemisch aus mehreren Polymeren und/oder Copolymeren enthält.

9. Verbindungen nach Anspruch 8, dadurch gekennzeichnet, daß das Polymermaterial Alkylenpolyoxide, Polyamide, Polyphosphazene oder Polyalkylenimine enthält.

10. Verbindungen nach Anspruch 9, dadurch gekennzeichnet, daß die Alkylenpolyoxide Polypropylenpolyoxid (POP) und Ethylenpolyoxid (POE) einschließen.

11. Verbindungen nach Anspruch 9, dadurch gekennzeichnet, daß die Polyphosphazene Äthergruppierungen enthalten und insbesondere einer Formel folgenden Typs entsprechen:

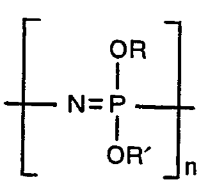

worin *R* und *R'* gesättigte Kohlenwasserstoffketten darstellen, die eventuell eines oder mehrere Heteroatome, vorzugsweise O und N, enthalten, welche eventuell mit aromatischen Gruppen verbunden sind, und wobei *n* die Anzahl der Anordnungen im Polymer bezeichnet.

12. Verbindungen nach Anspruch 9, dadurch gekennzeichnet, daß die Polyphosphazene Gruppierungen enthalten, die Sekundäramin-, Tertiäramin- oder Quaternärammoniumfunktionen tragen, entweder allein oder in Kombination, und die insbesondere Formeln folgender Art entsprechen:

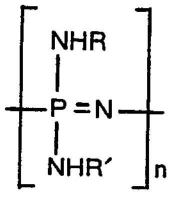

oder

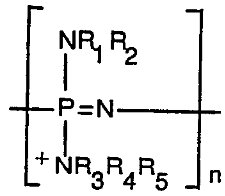

wobei R, R′, $R_1$, $R_2$, $R_3$, $R_4$ und $R_5$ ebenso definiert sind wie R und R′ in Anspruch 11.

13. Verbindungen nach Anspruch 9, dadurch gekennzeichnet, daß die Polyamide Anordnungen der Art

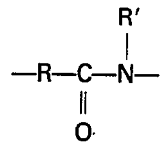

enthalten, worin R und R′ der Definition in Anspruch 11 entsprechen.

14. Verbindungen nach Anspruch 9, dadurch gekennzeichnet, daß die Polyalkylenimine, insbesondere substituierte Polyäthylenimine enthalten, die Anordnungen der Art

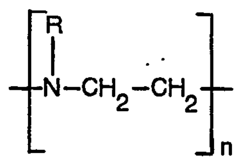

einschließen, wobei *R* der Definition aus Anspruch 11 entspricht.

15. Verbindungen nach einem der Ansprüche 8 bis 14, dadurch gekennzeichnet, daß die Polymere Substitutions-seitenketten enthalten, wobei davon auszugehen ist, daß diese den inerten Charakter gegenüber $O_2^-$ der Grundmasse behalten, insbesondere Perfluoralkylketten.

16. Verbindungen nach Anspruch 8, dadurch gekennzeichnet, daß das Polymermaterial veredelte Bereiche, angereichert oder nicht, enthält, die die Übergangssolvatation von $O_2^-$ ermöglichen, wie z.B. Gruppen bestehend aus den Polymeranordnungen nach einem der Ansprüche 10 bis 15, Pyridylgruppen oder sulfonamidartige

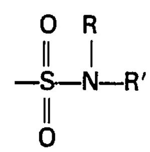

wobei *R* und *R′* der Definition in Anspruch 12 entsprechen.

17. Verbindungen nach Anspruch 8, dadurch gekennzeichnet, daß das Polymermaterial ein oder mehrere Anionenaustauscherharze enthält, vorzugsweise ein oder mehrere quaternäre Ammoniumharze einschließlich solcher Anordnungen wie:

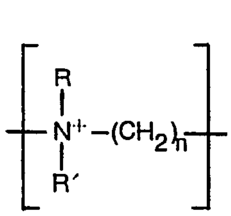

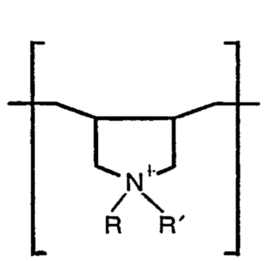

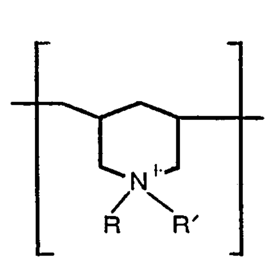

wobei R und R′ der Definition in Anspruch 11 entsprechen und die Harzanionen, die insbesondere unter den Fluor-, Chlorid-, Hydroxid-, Iodid-, Tetraphenylborat-, Carbonat- oder Acetatanionen ausgewählt wurden, vorher ganz oder teilweise durch $O_2^-$ ausgetauscht wurden.

18. Verbindungen nach Anspruch 17, dadurch gekennzeichnet, daß es sich bei dem Harz um ein ionisches Homo- oder Copolymer handelt, welches aus einem quaternären Vinyl- oder Allylammoniummonomer hergestellt wurde, allein oder als Mischpolymerisat mit anderen quaternären Allyl- oder Vinylammoniummonomeren verschiedener Art.

19. Verbindungen nach einem der Ansprüche 6 bis 18, dadurch gekennzeichnet, daß sie außerdem wenigstens einen Zusatz enthalten, der insbesondere in der Lage ist, die Ionenleitfähigkeit des Materials der Grundmasse zu erhöhen, ausgewählt insbesondere aus der Gruppe, zu der
a) Polymere besonders der Arten gehören, die in einem der Ansprüche 8 bis 16 definiert sind,
b) sowie Weichmacher wie polare Weichmacher, z.B. Cyanverbindungen, insbesondere eine diese Gruppen vom Typ 2,4,6-Trimethoxybenzonitril enthaltende Verbindung, oder aber
c) Salze, insbesondere vom Typ $A^-NR_4^+$, worin:
$A^-$ ein Anion ist, wie z.B. $ClO_4^-$, $B(C_6H_5)_4^-$, $C_n$, $F_{2n'+1}$ $SO_3^-$, wobei *R* der Definition in Anspruch 12 entspricht und *n'* eine ganze Zahl von ca. 1 bis 10 ist, oder
d) neutrale Zusätze, insbesondere Verbindungen mit einem Pyridinkern wie 2,2'-Bipyridin.

20. Verbindung nach einem der Ansprüche 6 bis 19, dadurch gekennzeichnet, daß das Polymermaterial netz- oder rasterförmig ist und insbesondere ein Raster aufweist, welches aus einem anderen, gegenüber $O_2^-$ Ionen inerten Polymer oder Copolymer gebildet wird.

21. Verbindungen nach einem der Ansprüche 1 bis 5, dadurch gekennzeichnet, daß die die $O_2^-$ Ionen enthaltende Grundmasse aus einer, eventuell gelierten, Flüssigkeit und einer Trägersubstanz besteht, die durch ein festes Material gebildet wird, welches die Perkolation der $O_2^-$ Ionen erlaubt.

22. Verbindungen nach Anspruch 21, dadurch gekennzeichnet, daß sie vorzugsweise dünne Trägersubstanzen enthalten, z.B. auf Glas- oder Keramikgrundlage, wie agglomerierte Glasfasern, Sinterglas oder poröses Glas, oder auf der Grundlage eines benetzbaren, porösen oder mit einer Imprägnierlösung aufblasbaren Polymers, wobei dieses Polymer chemisch gegenüber den Bestandteilen der Lösung inert ist.

23. Verbindungen nach Anspruch 20, dadurch gekennzeichnet, daß die davon getragene Flüssigkeit ein geschmolzenes oder in konzentrierter Lösung in einem verträglichen Lösungsmittel befindliches Superoxidsalz ist.

24. Verfahren zur Herstellung der Verbindungen nach einem der Ansprüche 1 bis 23, dadurch gekennzeichnet, daß es die Einarbeitung von $O_2^-$ Anionen in eine Grundmasse gemäß der Definition aus den vorangegangenen Ansprüchen einschließt, wobei diese Einarbeitung auf chemischem Wege in Anwesenheit eines Lösungsmittels vonstatten geht, worin die Grundmasse und das Superoxid löslich sind oder mit Hilfe von Zusätzen löslich gemacht werden können, vorteilhafterweise mit einem organischen Lösungsmittel wie Pyridin oder Benzen, oder aber auf elektrochemischem Wege, wobei die Ansemmlung von $O_2^-$ Anionen in einer elektrolytischen Grundmasse durch Austausch anderer vorher in der Grundmasse vorhandenen elektroaktiven Anionen bewirkt wird, welche durch anodische Oxidation in dem Maße beseitigt werden, wie an einer Kathode, die einem gasförmigen oder verdünnten Sauerstoffstrom ausgesetzt ist, $O_2^-$ Ionen erzeugt werden.

25. Verfahren nach Anspruch 24, dadurch gekennzeichnet, daß man zur Herstellung der Superoxidverbindungen in Membranform die Verdampfung des Lösungsmittels oder der Lösungsmittel aus einem Gemisch bewirkt, welches einerseits aus einer Lösung des Materials besteht, das die Grundmasse bildet, und andererseits aus einer Lösung des Superoxidsalzes, wobei diese Lösungen entgast werden und die gebildete Membran anschließend vorzugsweise in einem Inertgasstrom bei kontrollierter Temperatur getrocknet wird und man vorteilhafterweise einen Brennvorgang durchführt, vorzugsweise bei einer Temperatur in Nähe des Schmelzpunktes des Grundmassenmaterials, soweit das Superoxid bei dieser Temperatur nicht abgebaut wird.

26. Verfahren zur Herstellung von quaternären Ammoniumsuperoxiden, die im Rahmen des Verfahrens gemäß Anspruch 24 einsetzbar sind, dadurch gekennzeichnet, daß man in einem organischen Lösungsmittelmedium, insbesondere in Pyridin, folgendes zur Reaktion bringt:
a) ein quaternäres Ammoniumsalz, dessen gegenüber $O_2^-$ inertes Anion vorzugsweise unter den Anionen $F^-$, $I^-$, $OH^-$, $NO_3^-$, $ClO_4^-$, $PBh_4^-$, $CH_3COO^-$, $CO_3^{--}$ ausgewählt wird.
b) ein Superoxidüberschuß, dessen Kation ein alkalisches Metallkation ist, vorzugsweise $K^+$, oder ein quaternäres Ammoniumkation, vorzugsweise $TMA^+$.

27. Elektrolytische Materialien, dadurch gekennzeichnet, daß sie auf Superoxidverbindungen nach einem der Ansprüche 1 bis 23 basieren.

28. Materialen nach Anspruch 27, dadurch gekennzeichnet, daß sie außerdem elektronisch leitfähige Teilchen, wie z.B. Kohlenstoff- oder Magnetitteilchen $Fe_3O_4$, enthalten, wobei diese Teilchen eine ausreichende Konzentration aufweisen, um den genannten Materialien bei Einsatztemperatur elektronische Leitfähigkeit zu verleihen.

29. Materialen nach Anspruch 27 oder 28, dadurch gekennzeichnet, daß sie ein Polymermaterial enthalten, insbesondere ein Alkylenpolyoxid entsprechend der Definition aus Anspruch 10.

30. Materialien nach Anspruch 29, dadurch gekennzeichnet, daß sie ein Copolymer enthalten, insbesondere ein statisches Copolymer mit den Einheiten OE und OP, vorteilhafterweise wenigstens 5% OP, vorzugsweise ca. 40% wobei das Molekulargewicht des Copolymers in der Größenordnung von 5.000 bis 500.000 liegt.

31. Materialien nach einem der Anspruch 27 bis 30, dadurch gekennzeichnet, daß sie die Form von Membranen haben, die ein Gemisch aus Polymeren und einem oder mehreren Zusätzen enthalten, insbesondere ein Gemisch aus Polymeren/Zusätzen/Superoxid, entsprechend gewichtsanalytischen Anteilen von ca. 6:1:2, wobei das Polymergemisch insbesondere auf POE sowie einem anderen Polymer

wie POP basiert, vorzugsweise im Verhältnis 4:2.

32. Materialen nach Anspruch 31, dadurch gekennzeichnet, daß die Membranen [POE/POP/Zusatz wie THAP/Superoxid wie $TBAO_2$] enthalten, und zwar entsprechend den gewichtsanalytischen Anteilen von ca. [3:5/2/1/2] oder aber [POE/POP/Zusatz wie THAP/mineralisches Superoxid wie $KO_2$/Komplexbildner wie Kronenäther 18-crown-6] entsprechend den gewichtsanalytischen Anteilen [3:5/2/1/0,4/0,4].

33. Brennstoffzellen zur Sauerstoffübertragung, dadurch gekennzeichnet, daß sie als selektive Sauerstoff- und Stromtransportmittel $O_2^-$ Ionen einsetzen, die sich innerhalb einer Grundmasse aus einem elektrolytischen Material entsprechend einem der Ansprüche 27 bis 32 bewegen.

34. Brennstoffzellen nach Anspruch 33, dadurch gekennzeichnet, daß sie das elektrolytische Material, vorzugsweise in Membranform, enthalten, welches zwischen zwei Elektroden eingesetzt ist, die sich flächenparallel zum genannten Film erstrecken, wobei diese Elektroden aus einem gasdurchlässigen und gegenüber dem elektrolytischen Material bei einer Temperatur unter 100°C inerten leitfähigen Material bestehen, welches hinsichtlich der Anode nichtoxidierbar ist, wobei dieses Material für die beiden Elektroden gleich oder auch unterschiedlich sein kann.

35. Brennstoffzellen nach Anspruch 34, dadurch gekennzeichnet, daß die Elektrodenwerkstoffe auf Kohlenstoff basieren.

36. Brennstoffzellen nach Anspruch 34, dadurch gekennzeichnet, daß wenigstens eine der Elektroden aus einer Kombination von Werkstoffen besteht, insbesondere aus einem Netz eines Polymers mit erhöhten Widerstandseigenschaften, als Träger für einen sehr dünnen, elektronisch leitfähigen Polymerfilm, der wiederum mit glasartigem Kohlenpulver oder einem anderen Produkt angereichert ist, wodurch eine gute elektronische Übertragung gewährleistet ist, oder aber mit einer oder mehreren Substanzen, die gleichzeitig elektronische und ionische Leitfähigkeitseigenschaften gegenüber $O_2^-$ verleihen.

37. Brennstoffzellen nach einem der Ansprüche 33 bis 36, dadurch gekennzeichnet, daß sie einen gemischten elektronischen und ionischen Leiter enthalten, der zwischen der Elektrode und dem Elektrolyten eingesetzt ist, wobei $O_2^-$ löslich ist.

38. Brennstoffzellen nach einem der Ansprüche 33 bis 37, dadurch gekennzeichnet, daß sie die Form kleiner Module von jeweils einigen zehn bis einigen hundert $m^2$ haben, insbesondere die Form von zylindrischen Modulen, wo die Membran spiralförmig aufgewickelt ist, von der Art, wie sie bei der klassischen Gaspermeation verwendet werden, oder in Form von Modulen, die Membranen enthalten, welche balgenartig in einem Gehäuse gefaltet sind, wobei diese Module in Reihe, parallel oder serienparallel angeordnet sein können.

39. Verfahren zur selektiven Überleitung von Sauerstoff aus einem ersten Medium in ein zweites Medium, dadurch gekennzeichnet, daß man die elektrochemische Sauerstoffreduktion anwendet, die zur zeitweiligen Bildung von $O_2^-$ Ionen führt, unter Diffusion von Sauerstoff in $O_2^-$ Form in einem elektrolytischen Material nach einem der Ansprüche 27 bis 32, wobei dieses Material eine praktisch vollständig gasundurchlässige Sperre bildet, sowie mittels Oxidation der $O_2^-$ Ionen in Sauerstoff.

40. Verfahren nach Anspruch 39, dadurch gekennzeichnet, daß man mit Hilfe eines außenliegenden Stromgenerators eine Potentialdifferenz an die Klemmen der Elektroden einer Zelle anlegt, wie sie in einem der Ansprüche 33 bis 38 definiert ist, wobei das erste und das zweite Medium voneinander getrennt werden.

41. Verfahren nach Anspruch 39, dadurch gekennzeichnet, daß man eine Brennstoffzelle nach einem der Ansprüche 33 bis 38 verwendet, bei der die beiden Elektroden durch einen passiven äußeren Stromkreis miteinander verbunden sind, der einen Schalter und ein Regelwiderstandssystem aufweist, und daß man zwischen den beiden Flächen des elektrolytischen Materials der Zelle eine teilweise Sauerstoffdruckdifferenz aufrechterhält, wodurch der Sauerstoffstrom geregelt oder unterbrochen werden kann, der vom Medium mit hohem Sauerstoffteildruck an das Medium mit niedrigerem Teildruck übertragen wird.

42. Verfahren zur selektiven Überleitung von Sauerstoff aus einem ersten gasförmigen Medium mit hohem Sauerstoffteildruck in ein zweites Medium mit geringerem Sauerstoffteildruck, dadurch gekennzeichnet, daß man zwischen den genannten Medien, die durch eine Membran mit einem Material nach Anspruch 28 voneinander getrennt sind, eine Teildruckdifferenz aufrechterhält.

43. Verfahren zur Messung des Sauerstoffteildrucks in einem Gas, gekennzeichnet durch die Messung einer Differenz des elektrischen Potentials an den Klemmen der Elektroden einer Brennstoffzelle nach einem der Ansprüche 33 bis 37, wodurch die beiden Medien voneinander getrennt werden, unter Aufrechterhaltung eines Bezugs-Sauerstoffteildrucks in einem ersten Medium, welches an eine Elektrode angrenzt, und unter Zuführung eines Gases mit Sauerstoffteildruck, zu messen im zweiten Medium, welches an die andere Elektrode angrenzt.

44. Verfahren zur selektiven Überleitung von Sauerstoff aus einem ersten gasförmigen Medium mit einem hohen Sauerstoffteildruck in ein zweites Medium mit geringerem Sauerstoffteildruck, dadurch gekennzeichnet, daß man eine Teildruckdifferenz zwischen den betreffenden Medien aufrechterhält, die durch eine Brennstoffzelle nach einem der Ansprüche 33 bis 38 voneinander getrennt sind, und daß die an den Klemmen der Elektroden erzeugte elektrische Spannung als elektrische Energiequelle eingesetzt wird.

45. Anwendung der Verfahrens zur selektiven Überleitung von Sauerstoff nach einem der Ansprüche 39 bis 42 auf die Sauerstoffabscheidung, insbesondere im Hinblick auf die Erzeugung von Sauerstoff durch Konzentration aus der Luft, für die Industrie oder im medizinischen Bereich, die Reinigung von Gasen, die Sauerstoff enthalten, und die Einleitung kontrollierter Sauerstoffmengen in ein Gas.

## Claims

1. Superoxide-based solid compositions comprising:
— a material which is inert with respect to $O_2^-$ superoxide anions, and which acts as a matrix with regard to these anions,
— in the complete absence of applied potential, $O_2^-$ anions in a concentration of at least approximately $10^{-2}$ milliequivalent per gramme, notably at least approximately 1 to 2 milliequivalents per gramme, these compositions forming a stable material, up to a temperature no higher than 100°C approximately, the matrix allowing the mobility of the $O_2^-$ ions within this temperature range.

2. Compositions according to claim 1, characterised in that they are present in the form of a membrane, the thickness of which is preferably less than 500 µ approximately, advantageously in the order of 10 to 500 µ, advantageously approximately 30 to 100 µ.

3. Compositions according to one of claims 1 and 2, characterised in that they comprise $C^+O_2^-$ superoxide salts, $C^+$ representing a mineral cation, in particular of monovalent metal, more particularly of alkaline metal such as $Na^+$, $K^+$, $RB^+$ and $CS^+$, or of transition metal in the form of a complex.

4. Compositions according to any one of claims 1 to 3, characterised in that they comprise $C^+O_2^-$ superoxide salts, $C^+$ representing one or several organic cations, in particular a quaternary ammonium cation, more particularly $NR_4^+$ quaternary tetraalkylammonium, where *R* represents an alkyl radical with approximately 1 to 10 carbon atoms, preferably $TMA^+$, $TBA^+$ or $THA^+$.

5. Compositions according to claim 4, characterised in that the alkyl groups of the tetraalkylammonium cations are substituted by ether groups for example, by groups of the structure:

$$[-(CH_2)_2-O]_n-CH_3$$

where *n* is an integer, preferably between 1 and 5 approximately.

6. Compositions according to any one of claims 1 to 5, characterised in that the matrix is based on a macromolecular material.

7. Compositions according to claim 6, characterised in that the macromolecular material is based on a polymer material which is at least partly amorphous at operating temperatures, possessing a high dielectric constant and forming, with the superoxide, a phase, the vitreous transition temperature Tg of which is approximately 50°C lower than the operating temperature.

8. Compositions according to claim 7, characterised in that the polymer material is neutral or charged, comprising more particularly a majority of cationic sites, and is formed by a single type of polymer or copolymer, or comprises a mixture of several polymers and/or copolymers.

9. Compositions according to claim 8, characterised in that the polymer material comprises polyalkylene oxides, polyamides, polyphosphazenes or polyalkyleneimines.

10. Compositions according to claim 9, characterised in that the polyalkylene oxides comprise polypropylene oxide (POP) and polyethylene oxide (PEO).

11. Compositions according to claim 9, characterised in that the polyphosphazenes comprise ether groups and conform more particularly to a formula of the type:

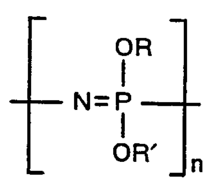

where *R* and *R'* represent saturated hydrocarbon chains, possibly comprising one or several heteroatoms, preferably O and N, possibly associated with aromatic groups, and *n* is the number of repeating units in the polymer.

12. Compositions according to claim 9, characterised in that the polyphosphazenes comprise groups bearing secondary amine, tertiary amine or quaternary amine functions, alone or in combination, and conform more particularly to formulae of the type:

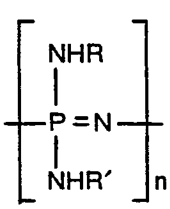 or 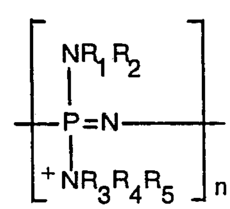

where R, R', $R_1$, $R_2$, $R_3$, $R_4$ and $R_5$ have the same meaning as R and R' in claim 11.

13. Compositions according to claim 9, characterised in that the polyamides comprise repeating units of the type:

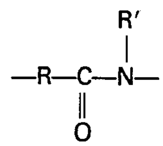

where *R* and *R'* have the same meaning as in claim 11.

14. Compositions according to claim 9, characterised in that the polyalkyleneimines comprise in particular substituted polyethyleneimines comprising repeating units of the type:

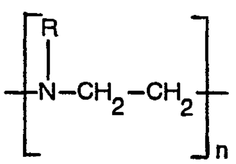

where *R* has the same meaning as in claim 11.

15. Compositions according to any one of claims 8 to 14, characterised in that the polymers comprise substitution side chains, these substitution side chains keeping their inert character with respect to $O_2^-$ of the matrix, in particular perfluoroalkyl chains.

16. Compositions according to claim 8, characterised in that the polymer material comprises charged or uncharged binding sites, permitting the transitory solvation of $O_2^-$, such as groups made up of the repeating units of the polymers according to any one of claims 10 to 15, of the pyridyl groups, or of the sulfonamide type:

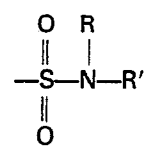

where *R* and *R'* have the same meaning as in claim 12.

17. Compositions according to claim 8, characterised in that the polymer material comprises one or several anion-exchange resins, preferably one or several quaternary ammonium resins, comprising repeating units such as:

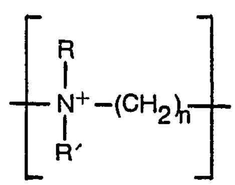
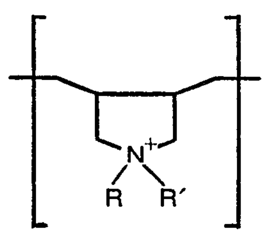
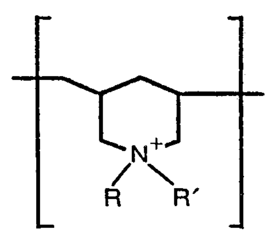

where R and R' have the same meaning as in claim 11, the anions of the resin being chosen notably from the fluoride, chloride, hydroxide, iodide, tetraphenylborate, carbonate or acetate anions, having previously been exchanged, wholly or partially, with $O_2^-$ anions.

18. Compositions according to claim 17, characterised in that the resin is an ionic homo- or co-polymer derived from a vinylic or allylic quaternary ammonium monomer, alone or as a copolymer with other, different vinylic or allylic quaternary ammonium monomers.

19. Compositions according to any one of claims 6 to 18, characterised in that they further comprise at least one additive which is capable, notably, of increasing the ionic conductivity of the matrix material, and which is chosen in particular from the group comprising:

a) polymers, more particularly of the type defined any one of claims 8 to 16,

b) plasticising agents, such as polar plasticisers, such as cyano compounds, in particular a compound comprising groups of the type 2,4,6-trimethoxybenzonitrile, or

c) salts, notably of the type $A^-NR_4^+$ where:

$A^-$ is an anion such as $ClO_4^-$, $B(C_6H_5)_4^-$, $C_n$, $F_{2n'+1}$ $SO_3^-$ where *R* has the same meaning as in claim 12, and

$n'$ is an integer between 1 and 10 approximately, or

d) neutral additives, in particular compounds comprising a pyridine nucleus such as 2,2'-bipyridine.

20. Compositions according to any one of claims 6 to 19, characterised in that the polymer material is in reticulated or cross-linked form, comprising notably a weft formed from another polymer or copolymer which is inert with respect to $O_2^-$ ions.

21. Compositions according to any one of claims 1 to 5, characterised in that the matrix containing the $O_2^-$ ions is the association of a liquid, possibly gelled, and a support made up of a solid material permitting the percolation of the $O_2^-$ ions.

22. Compositions according to claim 21, characterised in that they comprise supports, preferably thin, for example glass- or ceramic-based, such as agglomerated glass fibres, sintered glass or porous glass, or with a polymer base which is wettable, porous or can be inflated with an impregnation solution, this polymer being chemically inert with respect to the constituents of the solution.

23. Compositions according to claim 20, characterised in that the supported liquid is a superoxide molten salt or a concentrated solution in a compatible solvent.

24. Method of preparation of the compositions according to any one of claims 1 to 23, characterised in that it comprises the incorporation of $O_2^-$ anions in a matrix which is as defined in the preceding claims, this incorporation being carried out by chemical means in the presence of a solvent in which the matrix and the superoxide are soluble or can be made soluble with the help of additives, advantageously an organic solvent such as pyridine or benzene or, as a variant, by electrochemical means, in which the accumulation of $O_2^-$ anions is produced in an electrolytic matrix by replacement of other electro-active anions pre-existing in the matrix, these electro-active anions being eliminated by anodic oxidation at the same rate as the $O_2^-$ anions are created at a cathode which is subjected to a flow of gaseous or dissolved oxygen.

25. Process according to claim 24, characterised in that, for preparing the superoxide compositions in the form of a membrane, the evaporation is initiated of a solvent or solvents or a mixture made up of, on the one hand, a solution of the material which constitutes the matrix and, on the other hand, of a solution of the superoxide salt, these solutions being degasified, and the membrane, which is preferably formed under a current of inert gas at a controlled temperature, is then dried and annealing is advantageously carried out, preferably at a temperature close to the fusion of the matrix material, as long as the superoxide is not degraded at this temperature.

26. Process of preparation of quaternary ammonium superoxides which can be used in the process according to claim 24, characterised in that the following are caused to react in an organic solvent medium, notably in pyridine:

a) a quaternary ammonium salt having an anion inert with respect to $O_2^-$ is preferably chosen from $F^-$, $I^-$, $OH^-$, $NO_3^-$, $ClO_4^-$, $BPh_4^-$, $CH_3COO^-$, $CO_3^{--}$ anions,

b) an excess of superoxide, the cation of which is a cation of alkaline metal preferably $K^+$, or a quaternary ammonium cation preferably $TMA^+$.

27. Electrolytic materials, characterised in that they are based on superoxide compositions according to any one of claims 1 to 23.

28. Materials according to claim 27, characterised in that they further comprise electronically conducting particles such as particles of carbon or magnetite $Fe_3O_4$, these particles being in a concentration which is sufficient to confer on the said materials an electronic conductivity at the operating temperature.

29. Materials according to claims 27 or 28, characterised in that they comprise a polymer material, in particular polyalkylene oxide as defined in claim 10.

30. Materials according to claim 29, characterised in that they comprise a copolymer, more particularly a statistical copolymer having EO (ethylene oxide) and PO (propylene oxide) units, advantageously at least 5% PO, preferably 40% approximately, the molecular weight of the copolymer being in the order of 5,000 to 5000,000.

31. Materials according to any one of claims 27 to 30, characterised in that they are in the form of membranes comprising a mixture of polymers and one or several additives, in particular a mixture of polymers/additives/superoxide, according to the weight ratio of 6:1:2 approximately, the mixture of polymers being based in particular on PEO (polyethylene oxide), and another polymer such as POP (polypropylene oxide), preferably according to a ratio of 4:2.

32. Materials according to claim 31, characterised in that the membranes comprise [POE/POP/additive such as THAP (tetrahexylammonium perchlorate)/superoxide such as $TBAO_2$ (tetrabutylammonium superoxide)] according to the weight ratio of approximately [3 to 5:2:1:2], or [PEO/POP/additive such as THAP/superoxide mineral such as $KO_2$/complexing agent such as crown ether 18-crown-6] according to the weight ratio [3 to 5:2:1:0.4:0.4].

33. Electrochemical cells for oxygen transfer, characterised in that they employ $O_2^-$ ions as selective transporters of oxygen and current, which change position within a matrix of an electrolytic material according to any one of claims 27 to 32.

34. Electrochemical cells according to claim 33, characterised in that they comprise the electrolytic material, advantageously in the form of a membrane, confined between two coextensive electrodes face to face with the said film, these electrodes being made up of a conducting material which is permeable to gases, inert with respect to the electrolytic material at a temperature of less than 100°C, and unoxidizable at least as far as the anode is concerned, this material being the same or different for the two electrodes.

35. Electrochemical cells according to claim 34, characterised in that the electrode materials are carbon based.

36. Electrochemical cells according to claim 34, characterised in that at least one of the electrodes is formed of a combination of materials, notably a weft of a polymer having properties of high resistance, supporting a very thin film of electronically conducting polymer which is itself charged with vitreous carbon powder or another product assuring a good electronic transfer, or one or several materials conferring on them properties of both electronic and ionic conduction with respect to $O_2^-$.

37. Electrochemical cells according to any one of claims 33 to 36, characterised in that they comprise a mixed electronic and ionic conductor, interposed between the electrode and the electrolyte, in which $O_2$ is soluble.

38. Electrochemical cells according to any one of claims 33 to 37, characterised in that they are in the form of small modules, each of which is from several dozen to several hundred $m^2$, notably cylindrical modules where the membrane is spirally wound, of the type used in conventional gaseous permeation, or modules comprising membranes folded in the manner of an accordion in a casing, these modules being mounted in series, in parallel or in parallel series.

39. Process for the selective transfer of oxygen from a first medium to a second medium, characterised in that the electrochemical reduction of oxygen leading to the transitory formation of $O_2^-$ ions, the diffusion of oxygen in the form of $O_2^-$ through an electrolytic material according to any one of claims 27 to 32, this material constituting a barrier which is practically completely impermeable to gases, and the oxidation into oxygen of the $O_2^-$ ions, are initiated.

40. Process according to claim 39, characterised in that a potential difference is imposed with the help of an exterior electric generator at the connection terminals of the electrodes of a cell, as defined in any one of claims 33 to 38, which separates the first and second media.

41. Process according to claim 39, characterised in that an electrochemical cell according to any one of claims 33 to 38 is used, in which the two electrodes are connected by a passive exterior circuit comprising a switch and a variable resistance system, and in that, between the two faces of the electrolytic material of the cell, a difference of oxygen partial pressure is maintained, which permits regulation or interruption of the flow of oxygen which is transferred from the medium at a higher partial pressure of oxygen to the medium at a lower partial pressure.

42. Process for the selective transfer of oxygen from a first gaseous medium at a high partial pressure of oxygen towards a second medium at a lower partial pressure of oxygen, characterised in that a difference in oxygen partial pressure is maintained between the said media, which are separated by a membrane comprising a material according to claim 28.

43. Process for measuring the partial pressure of oxygen in a gas, characterised by the measurement of a difference of electrical potential appearing at the connection terminals of the electrodes of an electrochemical cell according to any one of claims 33 to 37 which separates two media, while maintaining a reference partial pressure of oxygen in a first medium adjacent to one electrode, and admitting a gas at a partial pressure of oxygen to be measured in the second medium adjacent to the other electrode.

44. Process for the selective transfer of oxygen from a first gaseous medium at a high partial pressure of oxygen into a second medium at a lower partial pressure of oxygen, characterised in that a difference of oxygen partial pressure is maintained between the media under consideration, which are separated by an electrochemical cell according to any one of claims 33 to 38, and in that the electric voltage generated at the connection terminals of the electrodes is used as a source of electrical energy.

45. Application of the process for selective transfer of oxygen according to any one of claims 39 to 42 with the separation of oxygen, notably for the purpose of the production of oxygen by concentration from the air, for industry or in the medical field, and for the purposes of the purification of gas containing oxygen and the introduction of controlled amounts of oxygen into a gas.

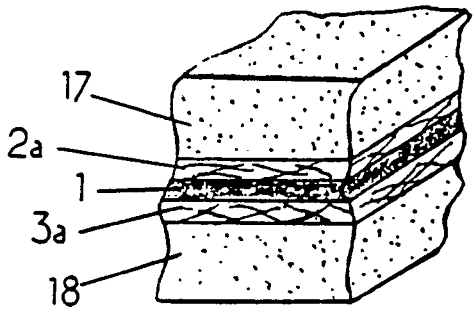


FIG.1b.

FIG.1a.

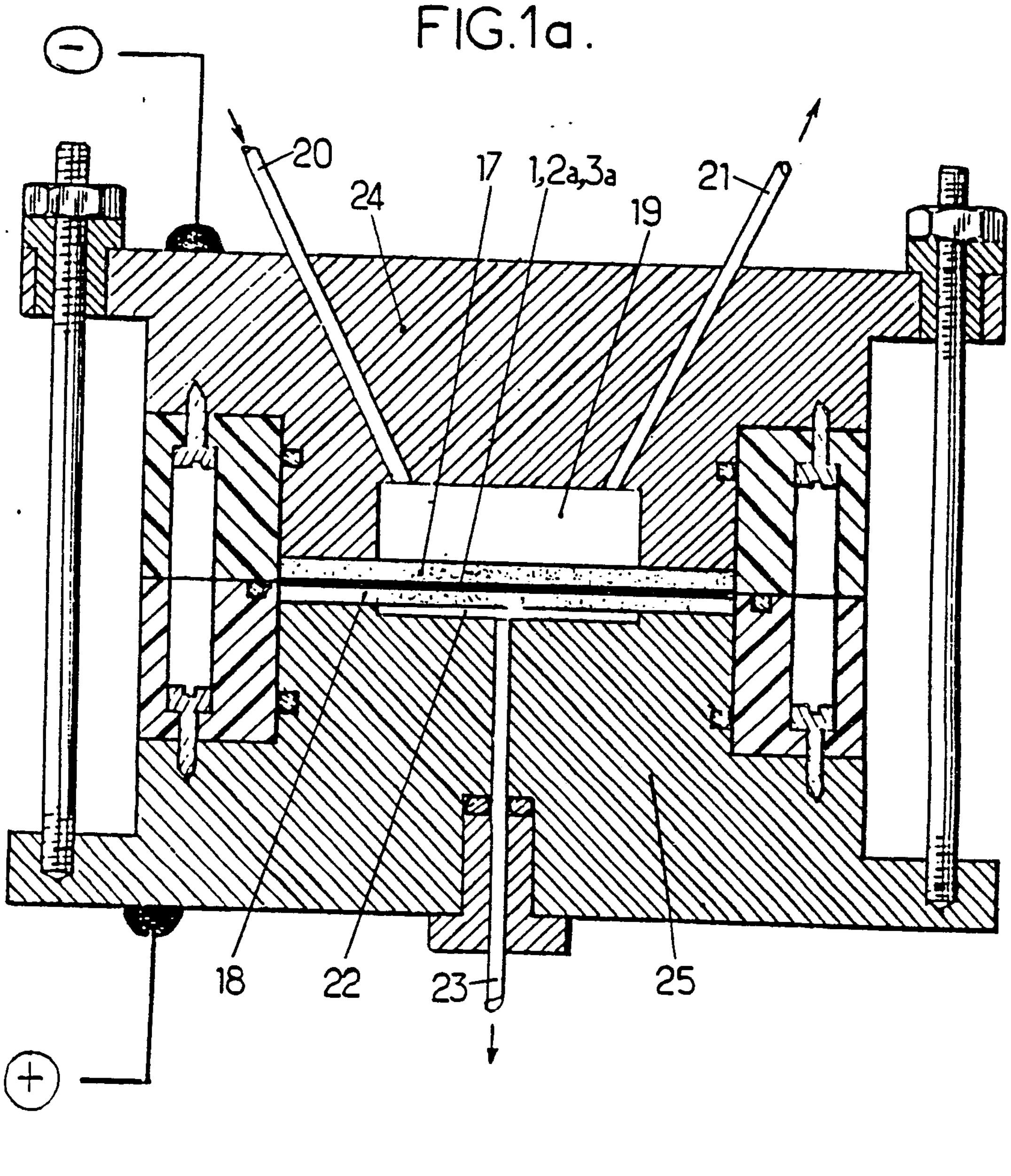

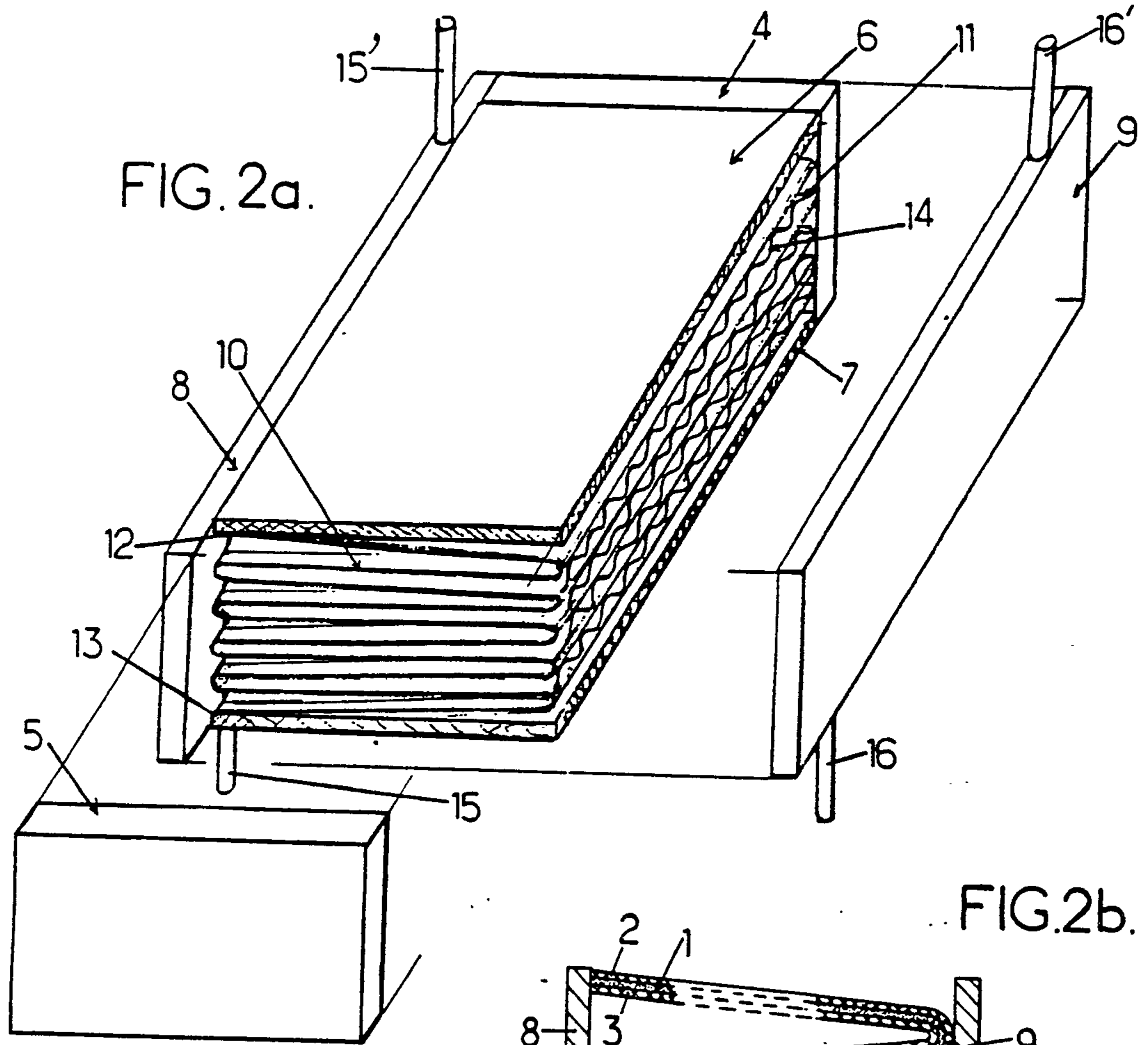


FIG. 2a.

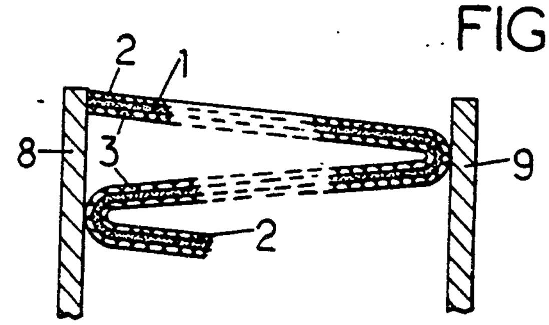


FIG. 2b.

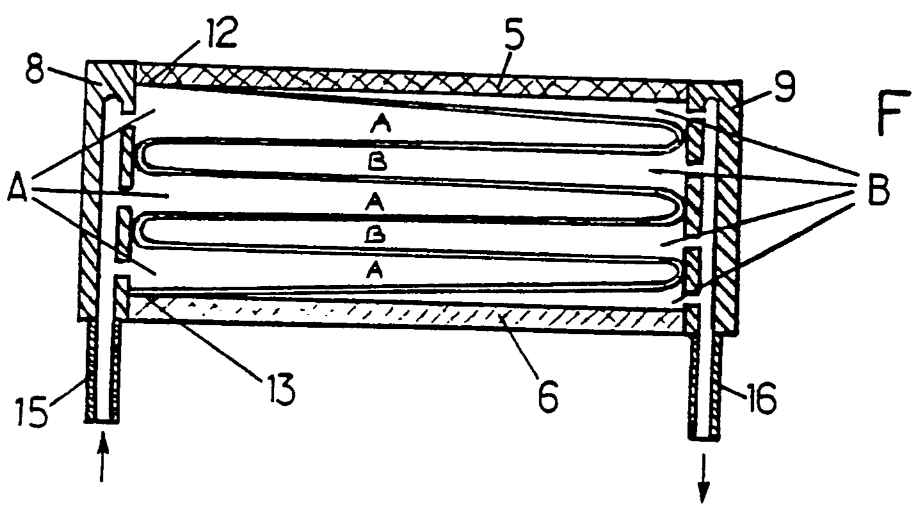


FIG. 3.